# EUROPEAN PATENT APPLICATION

(11) **EP 4 819 193 A2**
(43) Date of publication of application: **07.10.2026**
(21) Application number: 26185300.6
(22) Date of filing: 11.02.2019
(51) Int. Cl.: H01J 49/04

(54) **SAMPLE HANDLING SYSTEMS, MASS SPECTROMETERS AND RELATED METHODS**

(30) Priority: 13.02.2018 US 201862629746 P; 28.03.2018 US 201862648973 P
(62) Document number(s) of the earlier application(s) in accordance with Art. 76 EPC: 19753971.1 / 3 753 041
(71) Applicant: bioMérieux, Inc., Salt Lake City, UT 84108 (US)
(72) Inventor: BULLOCK, Jared, Saint Louis, 63114 (US); COLLINS, Scott, Westford, 01886 (US); MACGREGOR, Ian, Merrimack, 03054 (US); TALMER, Mark, Pepperell, 01886 (US)
(74) Representative: Murgitroyd & Company

(57) **Abstract**

Slide analysis a gripper with three sensors for controlling a slide grip sequence and at least one rotatable carousel with a slide receiving channel. The systems also include a robot with a robot arm that holds a slide gripper residing inside the housing in communication with the rotatable carousel. The systems also include a load lock chamber and a door sealably coupled to the second end portion and an acquisition vacuum chamber with an X-Y stage and a slide holder with a vacuum seal.

## Description

### Related Applications

This application claims the benefit of and priority to U.S. Provisional Patent Application Serial Number 62/629,746, filed February 13, 2018, and to U.S. Provisional Patent Application Serial Number 62/648,973, filed March 28, 2018, the contents of which are hereby incorporated by reference as if recited in full herein.

### Field

The present invention relates to sample handling systems and is particularly suitable for samples analyzed by mass spectrometers.

### Background

Mass spectrometers are devices which ionize a sample and then determine the mass to charge ratios of the collection of ions formed. One well known mass analyzer is the time-of-flight mass spectrometer (TOFMS), in which the mass to charge ratio of an ion is determined by the amount of time required for that ion to be transmitted under the influence of electric fields (pulsed and/or static) from the ion source to a detector. The spectral quality in TOFMS reflects the initial conditions of the ion beam prior to acceleration into a field free drift region. Specifically, any factor which results in ions of the same mass having different kinetic energies and/or being accelerated from different points in space will result in a degradation of spectral resolution, and thereby, a loss of mass accuracy. Matrix assisted laser desorption ionization (MALDI) is a well-known method to produce gas phase biomolecular ions for mass spectrometric analysis. The development of delayed extraction (DE) for MALDI-TOF has made high resolution routine for MALDI-based instruments. In DE-MALDI, a short delay is added between the ionization event, triggered by the laser, and the application of the accelerating pulse to the TOF source region. The fast (i.e., high-energy) ions will travel farther than the slow ions thereby transforming the energy distribution upon ionization to a spatial distribution upon acceleration (in the ionization region prior to the extraction pulse application).

*See* U.S. Pat. Nos. 5,625,184, 5,627,369 and 5,760,393. *See also*, Wiley et al., Time-of-flight mass spectrometer with improved resolution, Review of Scientific Instruments vol. 26, no. 12, pp. 1150-1157 (2004); M. L. Vestal, Modern MALDI time-of-flight mass spectrometry, Journal of Mass Spectrometry, vol. 44, no. 3, pp. 303-317 (2009); Vestal et al., Resolution and mass accuracy in matrix-assisted laser desorption ionization-time-of-flight, Journal of the American Society for Mass Spectrometry, vol. 9, no. 9, pp. 892-911 (1998); and Vestal et al., High Performance MALDI-TOF mass spectrometry for proteomics, International Journal of Mass Spectrometry, vol. 268, no. 2, pp. 83-92 (2007). The contents of these documents are hereby incorporated by reference as if recited in full herein.

### Summary

Embodiments of the present invention are directed to sample handling systems for instruments configured for sample analysis.

Embodiments of the present invention are directed to mass spectrometer systems with sample handling systems that include a 3-D robot assembly and a load lock chamber in fluid communication with a vacuum chamber.

Embodiments of the invention are directed to a slide handling assembly. The assembly includes a slide gripper comprising first and second gripper arms that are parallel and side-by-side and pivotably held by a laterally extending shaft adjacent an upper jaw and lower jaw of the slide gripper, the first arm coupled to the upper jaw of the slide gripper and the second arm coupled to the lower jaw of the slide gripper.

The assembly can further include a gripper motor coupled to the first and second gripper arms.

The assembly can also include a home sensor, a grip sensor and a slide presence sensor, and each sensor each can be coupled to at least one of the first and second gripper arms. The assembly can also include a control circuit in communication with the gripper motor and the home sensor, the grip sensor and the slide presence sensor. The control circuit can receive sensor data from the home sensor, the grip sensor and the slide presence sensor to identify an open or closed state of the upper jaw and lower jaw, and, if the upper and lower jaw are in the closed state, to identify whether a slide is present.

The first gripper arm can reside adjacent to but at a height above the second gripper arm.

The home sensor and the grip sensor can be aligned, one above another, and may reside on a printed circuit board that can be coupled to an end of the first gripper arm.

An end of the second gripper arm can be coupled to the slide presence sensor. The slide presence sensor can be held by the printed circuit board adjacent but spaced apart from the home sensor and the grip sensor.

Yet other embodiments are directed to slide sample handling and/or analysis systems. The systems include a housing having a front wall with a slide port and an input/output module with at least one rotatable carousel that includes a slide receiving channel. The carousel rotates between first and second positions. The first position is a slide intake position that positions an open end of the slide receiving channel outward, aligned with the slide port to be able to slidably receive a slide. The second position places the open end of the slide channel facing into the housing. The systems also include a robot with a robot arm that holds a slide gripper residing inside the housing in communication with the rotatable carousel. The robot arm can move in three-dimensions in the housing. The systems also include a load lock chamber having longitudinally opposing first and second end portions, a through channel, and a door sealably coupled to the second end portion. The systems further include an acquisition vacuum chamber with an X-Y stage and a slide holder with a vacuum seal interface that can extend into the load lock chamber to seal the first end portion of the load lock chamber and retract with a slide transferred to the slide holder from the slide gripper of the robot into the acquisition vacuum chamber, after the door of the load lock chamber is closed.

The carousel can be configured to have a single one of the slide receiving channel that may have a length that extends over greater than a major portion of a diameter of the carousel across a center of the carousel.

The open end of the slide channel can have a perimeter that is recessed inward relative to an outer diameter of the carousel.

The slide gripper can have first and second gripper arms that are parallel and side-by-side and can be pivotably held by a laterally extending shaft adjacent an upper jaw and lower jaw of the slide gripper. The first arm can be coupled to the upper jaw of the slide gripper and the second arm can be coupled to the lower jaw of the slide gripper.

The upper jaw can have a notch that cooperates with an alignment member for calibrated robot movement in the unit housing for accurate movement to and from defined operational positions.

The system can further include a gripper motor coupled to the first and second gripper arms and a home sensor, a grip sensor and a slide presence sensor. Each sensor can be coupled to at least one of the first and second gripper arms. The system can further include a control circuit in communication with the gripper motor and the home sensor, the grip sensor and the slide presence sensor. The control circuit can receive sensor data from the home sensor, the grip sensor and the slide presence sensor to identify an open or closed state of the upper jaw and lower jaw, and, if the upper and lower jaw are in the closed state, to identify whether a slide is present.

The first gripper arm can reside adjacent to but at a height above the second gripper arm. The home sensor and the grip sensor can be aligned, one above another and each may be held on a printed circuit board coupled to an end of the first gripper arm.

An end of the second gripper arm can be coupled to the slide presence sensor. The slide presence sensor can be held by the printed circuit board adjacent but spaced apart from the home sensor and the grip sensor.

The printed circuit board can be attached to a pivotable arm segment of the robot arm of the robot

The system can have a first vacuum pump connected to the acquisition vacuum chamber and a second vacuum pump connected to the load lock chamber. The first vacuum pump can reside above the second vacuum pump in the housing.

The system can further include a removable bezel face plate providing the slide port. The bezel face plate can be held by a bevel bracket with an open window that is coupled to an upper bracket member that resides inside the housing and angles inwardly at an angle between 5-45 degrees from a location adjacent the bezel face plate to an upper segment thereof.

The bezel face plate can have a width between 4-6 inches and a height between 6-10 inches.

The housing can be a table-top housing configured with a width, length and height of about: 0.7 m x 0. 7 m x 1.1 m.

The housing can include an internal sample storage space with a width, length and height size that is about 0.25 m x 0.3 m by 0.3 m.

The removable bezel face plate can be attached to an internal bezel bracket plate that has an upper bracket member that can hold a camera. The upper bracket member can extend inwardly from a segment proximate the bezel face plate to an upper segment thereof at an angle between 5-45 degrees. The camera can have a field of view that covers at least an end portion of the slide when the carousel is in the second position.

The input/output module can have a drive motor coupled to a drive shaft under the carousel that rotates the carousel between the first and second positions. When the removable bezel face plate is detached from the housing to expose an access window, the carousel can be removed from the access window of the housing for cleaning.

The system can further include a plurality of spaced apart intake vents in fluid communication with intake fans with filters on a back of the housing and a plurality of output vents in fluid communication with output fans on a top of the housing. The intake and output fans can cooperate to provide a positive pressure inside the housing with passive and/or fan-driven airflow out of the housing to inhibit contaminants from entering the housing.

The home sensor and the grip sensor can be separately triggerable by a position of a first end of the first arm. The slide presence sensor can be triggerable by a position of a first end of the second arm.

The system can include a laser coolant path that extends from an inlet on a front of the housing (over a laser and/or laser heat sink) to an outlet on top of the housing.

The robot can have a base that is mounted to a floor of the housing. The input/output module can have a base that is mounted to the floor of the housing adjacent the robot base, closer to the front of the housing than the robot base.

The port can be oblong in a lateral dimension with laterally opposing arcuate ends.

The through channel of the load lock chamber can have a lateral width that is greater than a height and can have a volume that is between 1 cc and 100 cc.

Embodiments of the invention are directed to methods of operating a slide gripper assembly. The methods can include: providing a slide gripper assembly with first and second adjacent arms, one attached to a lower jaw and one attached to a cooperating upper jaw; and electronically directing a closing and opening of the upper and lower jaws whereby a state of one or more of a first home sensor, a second grip sensor and a third slide presence sensor correlates to a position of the gripper jaws.

The directing a closing and opening of the upper and lower jaws can optionally be in response to a signal input from one or more of a first home sensor, a second grip sensor and a third slide presence sensor.

The home sensor and the second grip sensor can be separately triggerable by a position of a first end of the first arm. The third slide presence sensor can be triggerable by a position of a first end of the second arm.

The first arm can be an upper arm that that is above the second arm and can be attached to the lower jaw. The first and second arms can be attached together by a laterally extending shaft adjacent the upper and lower jaws. The method can include pivoting the lower shaft to have a horizontal orientation only when a slide is present between the upper and lower jaws which can then trigger the third slide presence sensor to identify a slide present state.

When the upper and lower jaws are closed, the first end of the first arm can move up to trigger the second grip sensor to report a closed state for the electronically directing step.

Yet other embodiments are directed to methods of handling a sample for analysis. The methods include: providing a housing with a mass spectrometer, a load lock chamber with opposing first and second end portions, and an acquisition vacuum chamber. The first end portion of the load lock chamber is in or adjacent the acquisition vacuum chamber and the second end portion is spaced apart from the first end portion and has a sealably attachable door. The methods also include: providing a positive pressure inside the housing outside the acquisition vacuum chamber; receiving a slide for analysis in a slide receiving channel of a carousel via a port at a front of the housing; rotating the carousel; gripping an end portion of the slide with a slide gripper held by an arm of a robot; moving the slide in three-dimensions in the housing from the carousel toward the load lock chamber or a storage rack; inserting a slide holder of an X-Y stage into the load lock chamber from the vacuum chamber while the door is sealably closed to the second end portion of the load lock chamber; automatically sealing the first end portion of the load lock chamber from the vacuum chamber upon engagement of the slide holder with a seal interface of the first end portion of the load lock chamber; venting the load lock chamber to atmosphere; opening the door; inserting the slide from the slide gripper into the load lock chamber from the second end portion of the load lock chamber to transfer the slide to the slide holder in the load lock chamber; closing the door to seal the load lock chamber; evacuating the load lock chamber to a vacuum pressure; and retracting the slide holder with the slide into the vacuum chamber while the door is closed and the load lock chamber is under vacuum.

The methods can further include analyzing a sample in or on the slide. The sample can be analyzed to identify one or more microorganisms by analyzing a mass range between about 2000 to about 20,000 Dalton.

The providing the positive pressure can create a passive airflow path that includes a path out of a top of the housing (optionally with active intake/outlet fan drive).

The methods can also include generating a laser coolant air flow path from a front of the housing over a heat sink of a laser then and up and out of the top of housing.

The method can include removing a detachable bezel plate from a front wall of the housing which holds the port on the front of the housing, then allowing a user to remove the carousel through the front of the housing.

Embodiments of the invention are directed to delayed extraction (DE) matrix assisted laser desorption ionization (MALDI) time-of-flight mass spectrometers (TOF MS) with onboard sample handling systems. The flight tube can have a length that is between about 0.4 m and about 1 m. However, longer or shorter lengths may optionally be used.

The sample can be undergoing analysis to identify one or more microorganisms are present by analyzing a mass range of between about 2000 to about 20,000 Dalton.

The sample can be undergoing analysis to identify one or more different types of bacteria and/or fungi that may be present by analyzing a mass range that is between about 2000-20,000 Dalton.

The method can include identifying a microorganism or protein in the sample based on the signal.

Further features, advantages and details of the present invention will be appreciated by those of ordinary skill in the art from a reading of the figures and the detailed description of the preferred embodiments that follow, such description being merely illustrative of the present invention.

It is noted that aspects of the invention described with respect to one embodiment, may be incorporated in a different embodiment although not specifically described relative thereto. That is, all embodiments and/or features of any embodiment can be combined in any way and/or combination. Applicant reserves the right to change any originally filed claim or file any new claim accordingly, including the right to be able to amend any originally filed claim to depend from and/or incorporate any feature of any other claim although not originally claimed in that manner. These and other objects and/or aspects of the present invention are explained in detail in the specification set forth below.

### Brief Description of the Drawings

**FIG. 1A** is a front, side perspective view of an exemplary mass spectrometry system according to embodiments of the present invention.
**FIG. 1B** is a partial front perspective view of the exemplary mass spectrometry system shown in **FIG. 1A** according to embodiments of the present invention.
**FIG. 1C** is a front perspective partial view of the mass spectrometry system shown in **FIG. 1A** with the external walls removed to illustrate internal components according to embodiments of the present invention.
**FIG. 2** is a block diagram of a mass spectrometry system illustrating operational modules according to embodiments of the present invention.
**FIGS. 3A-3H** are partial side perspective views of a slide handling system according to embodiments of the present invention.
**FIG. 4A** is a side perspective view of the slide handling system and load lock chamber shown in a loading configuration according to embodiments of the present invention.
**FIG. 4B** is a side view of the components and configuration shown in **FIG. 4A****.**
**FIG. 5A** is a side perspective view of the slide handling system and load lock chamber shown in **FIG. 4A****,** shown with the slide transferred to an X-Y stage and with the load lock door closed configuration according to embodiments of the present invention.
**FIG. 5B** is a side view of the components and configuration shown in **FIG. 5A****.**
**FIG. 5C** is a front, left side perspective view (viewed facing the primary vacuum chamber) of the load lock chamber assembly shown in **FIG. 5A** according to embodiments of the present invention.
**FIG. 5D** is a partial section view of a load lock chamber assembly according to embodiments of the present invention.
**FIG. 6A** is a side perspective view of an example slide handling robot assembly according to embodiments of the present invention.
**FIG. 6B** is a side perspective view of components of a Z-axis sub-assembly of the slide handling robot assembly shown in **FIG. 6A** according to embodiments of the present invention.
**FIG. 6C** is a side perspective view of components of a theta sub-assembly of the slide handling robot assembly shown in **FIG. 6A** according to embodiments of the present invention.
**FIG. 6D** is a top, partially transparent view of the theta sub-assembly shown in **FIG. 6C****.**
**FIG. 6E** is a side, partially transparent view of the theta sub-assembly shown in **FIG. 6C****.**
**FIG. 6F** is a side perspective view of an R sub-assembly of the slide handling robot assembly shown in **FIG. 6A** according to embodiments of the present invention.
**FIG. 6G** is a sample handling arm sub-assembly of the slide handling robot assembly shown in **FIG. 6A** according to embodiments of the present invention.
**FIG. 6H** is a perspective, partial exploded view of components of the sub-assembly shown in **FIG. 6G****.**
**FIGS. 7A-7D** are partial, side perspective views of an exemplary slide output sequence according to embodiments of the present invention.
**FIG. 8A** is an internal side perspective view of a slide interface I/O module (assembly) according to embodiments of the present invention.
**FIG. 8B** is an external side perspective view of the slide interface I/O module shown in **FIG. 8A****.**
**FIG. 9A** is an enlarged internal side perspective view of a portion of the slide I/O module shown in **FIG. 8A****.**
**FIG. 9B** is a top perspective exploded view of a slide I/O carousel according to embodiments of the present invention.
**FIG. 9C** is a bottom perspective exploded view of the slide I/O carousel shown in **FIG. 9B.**
**FIG. 10A** is an enlarged side perspective view of a portion of the slide I/O module shown in **FIG. 8A** according to embodiments of the present invention.
**FIG. 10B** is a side perspective view of the module shown in **FIG. 8A** oriented to show the home sensor shown in **FIG. 10B****.**
**FIG. 11A** is a bottom, side perspective view of the module shown in **FIG. 8A** illustrating a carousel drive assembly according to embodiments of the present invention.
**FIG. 11B** is an enlarged, internal perspective view of a lower portion of the module shown in **FIG. 11A** according to embodiments of the present invention.
**FIG. 11C** is a partial front perspective view of an instrument with the slide I/O module shown in **FIG. 11A** illustrating the removable bezel faceplate removed according to embodiments of the present invention.
**FIG. 11D** is a partial front perspective view of the housing of the instrument with the bezel faceplate removed illustrating the removable carousel through the open space of the removed bezel faceplate according to embodiments of the present invention.
**FIG. 12** is a top, side perspective view of an exemplary slide gripper sub-assembly according to embodiments of the present invention.
**FIG. 13A** is a side view of the device shown in **FIG. 12****.**
**FIG. 13B** is a top view of the device shown in **FIG. 12****.**
**FIG. 13C** is an enlarged top view of another embodiment of the slide-gripper sub-assembly shown in **FIG. 12** and shown with a cooperating alignment member according to embodiments of the present invention.
**FIG. 13D** is a side perspective view of the devices shown in **FIG. 13C****.**
**FIG. 13E** is an enlarged partial side view of the devices shown in **FIG. 13C** with the alignment member outside the alignment notch.
**FIG. 13F** is an enlarged partial side view of the devices shown in **FIG. 13E** with the alignment member in the alignment notch according to embodiments of the present invention.
**FIG. 13G** is a bottom, side perspective view of the devices shown in **FIG. 13F** but illustrating an undesired gap indicating the gripper is not in the proper origin position.
**FIG. 13H** is a bottom, side perspective view of the devices shown in **FIG. 13F** illustrating a proper origin position with no gap between the alignment member and lower grip member according to embodiments of the present invention.
**FIG. 14A** is a side perspective view of components of the device shown in **FIG. 12** with a first sensor status mode according to embodiments of the present invention.
**FIG. 14B** is a side view of the components shown in **FIG. 14A** illustrating the associated gripper configuration.
**FIG. 15A** is a side perspective view of components of the device shown in **FIG. 12** with a second sensor status mode according to embodiments of the present invention.
**FIG. 15B** is a side view of the components shown in **FIG. 15A** illustrating the associated gripper configuration.
**FIG. 16A** is a side perspective view of components of the device shown in **FIG. 12** with a third sensor status mode according to embodiments of the present invention.
**FIG. 16B** is a side view of the components shown in **FIG. 16A** illustrating the associated gripper configuration.
**FIG. 17** is a front, partial perspective view of internal components of an instrument with a load lock chamber coupled to an X-Y stage according to embodiments of the present invention.
**FIG. 18A** is a top view of an X-Y stage according to embodiments of the present invention.
**FIG. 18B** is a side perspective view of the X-Y stage shown in **FIG. 18A****.**
**FIG. 18C** is a top perspective view of the X-axis components of the X-Y stage shown in **FIG. 18A** according to embodiments of the present invention.
**FIG. 18D** is a side perspective view of the Y-axis components of the X-Y stage shown in **FIG. 18A** according to embodiments of the present invention.
**FIG. 19** is a side perspective view of the load lock chamber assembly adjacent a storage rack of slides in an instrument such as a mass spectrometer according to embodiments of the present invention.
**FIGS. 20A** and **20B** are side, perspective and partially transparent views of the instrument illustrating exemplary vacuum systems for the vacuum chamber and/or load lock chamber according to embodiments of the present invention.
**FIG. 21** is a rear, top perspective view of an instrument with a positive pressure configuration for controlling air flow according to embodiments of the present invention.
**FIG. 22** is a flow chart of a method of handling a sample for analysis according to embodiments of the present invention.
**FIG. 23A** and **23B** are flow charts of a method of handling a sample for analysis according to embodiments of the present invention.

### Detailed Description

The present invention now will be described more fully hereinafter with reference to the accompanying drawings, in which illustrative embodiments of the invention are shown. Like numbers refer to like elements and different embodiments of like elements can be designated using a different number of superscript indicator apostrophes (e.g., **10, 10', 10", 10‴**).

In the figures, certain layers, components or features may be exaggerated for clarity, and broken lines illustrate optional features or operations unless specified otherwise. The terms "FIG." and "Fig." are used interchangeably with the word "Figure" in the application and/or drawings. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that, although the terms first, second, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath", "below", "bottom", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass orientations of above, below and behind. The device may be otherwise oriented (rotated 90° or at other orientations) and the spatially relative descriptors used herein interpreted accordingly.

The term "about" refers to numbers in a range of +/-20% of the noted value.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

The term "signal acquisition time" refers to the time that a digital signal of mass spectra of a single sample is collected or acquired from a detector of a mass spectrometer for analysis of the sample.

The terms "time delay" and "delay time" are used interchangeably and refer to a time between laser pulse (firing/transmission) and extraction pulse, *i.e.*, between ionization and acceleration, for delayed extraction.

In some embodiments, the mass spectrometer is configured to obtain ion signal from a sample that is in a mass range of about 2,000 to about 20,000 Dalton.

The term "pass" refers to the collection of spectra across a single sample spot, e.g., one full sweep across a spot. The term "shot" refers to the generation and collection of a single spectrum.

The term "sample" refers to a substance undergoing analysis and can be any medium within a wide range of molecular weights. In some embodiments, the sample is being evaluated for the presence of microorganisms such as bacteria or fungi. However, the sample can be evaluated for the presence of other constituents including toxins or other chemicals.

The term "substantially the same" when referencing the peak resolution means that the spectra over a target range, typically between 2kDa to 20kDa, between 3 kDa to 18 kDa, and/or between about 4kDa to 12kDa, have a resolution that is within 10% of a defined focus mass peak resolution. Examples of focus masses are 4kDa, 8kDa, 12kDa and 18kDa.

The term "table top" with respect to a sample analysis apparatus refers to a relatively compact unit that can fit on a standard table top or counter top and/or occupy a footprint equivalent to a table top, such as a table top that has width by length dimensions of about 1 foot by 6 feet, for example, and which typically has a height dimension that is between about 1-4 feet. In some embodiments, the system resides in an enclosure or housing of 14-28 inches (W) x 14-28 inches (D) x 28-38 inches (H).

The term "module" refers to hardware or firmware, hardware and firmware or hardware (e.g., computer hardware) or software components that carry out defined functionality.

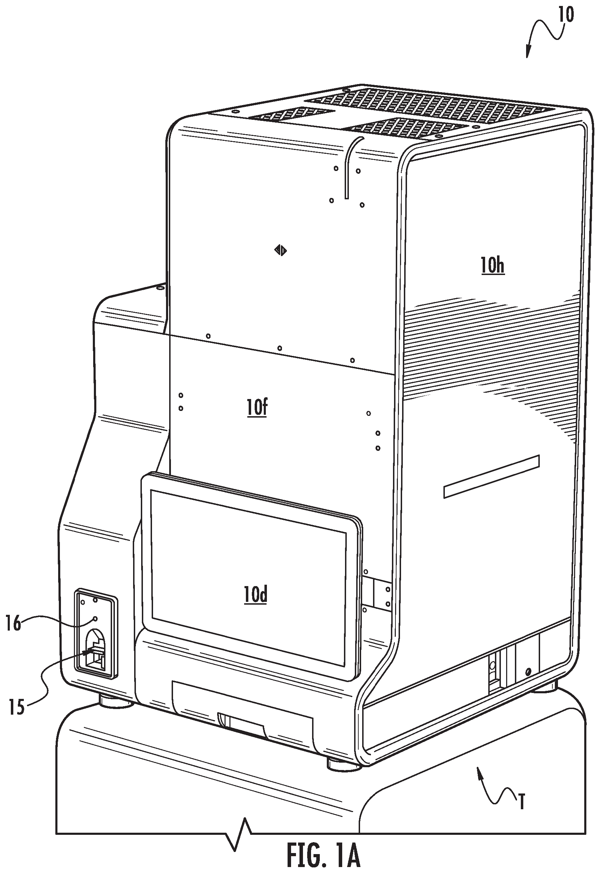

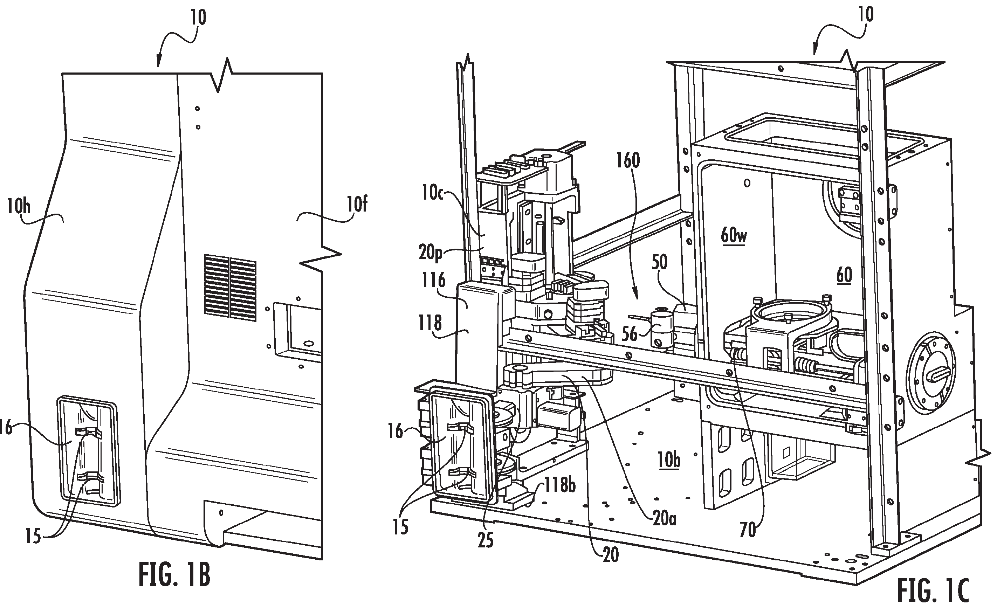

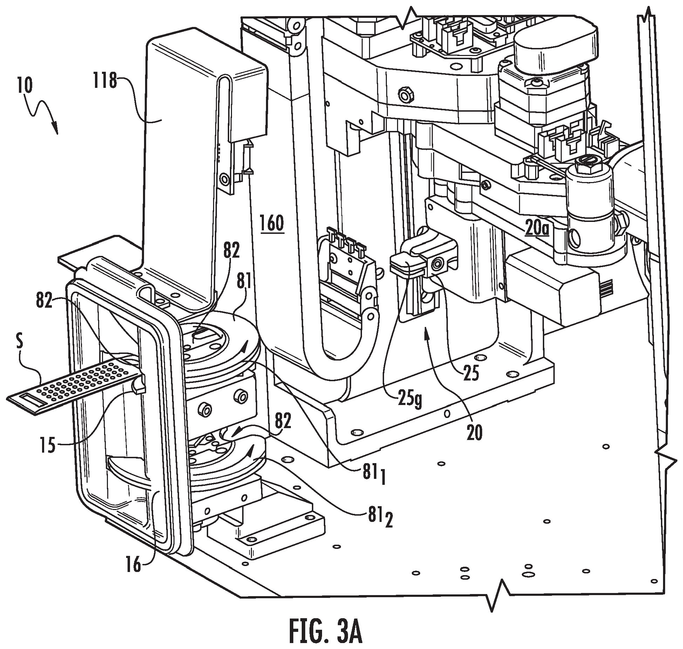

**FIG. 1A** and **FIG. 1B** illustrate an exemplary system **10** which may be a mass spectrometer system, or other sample analysis instrument or unit. As shown, the system **10** includes a housing **10h** with a front wall **10f** with a display **10d** with a user interface and at least one sample specimen port **15**, shown as a single port in **FIG. 1A** and as dual aligned ports in **FIG. 1B**, sized and configured to serially receive and/or output slides but more than two ports may be used. A respective port **15** can be configured as entry only, exit only, or as both an entry and exit port for specimen slides "**S**" (**FIG. 3A**) for analysis. As shown in **FIG. 1A**, the system **10** can be sized and configured as a table top unit that can reside on a table top **T**.

**FIG. 1C** illustrates some internal components of the system **10**, shown without the analyzer components (i.e., ionizer, TOF tube (where used) and detector). As shown, the system **10** can include a robot **20** with a slide holder **25,** a load lock chamber assembly **50** coupled to a wall **60w** of a vacuum chamber **60** and an X-Y stage **70.** The term "robot" is used broadly and refers to an electro-mechanical system with multiple degrees of freedom that can automatically move a respective slide **S** along various positions in the mass spectrometer system **10.** The robot **20** can have an arm **20a** that carries out the defined positional movements and is typically affixed to a mounting bracket **20p** at a front corner **10c** location inside of the housing **10h** as shown in **FIG. 1B****.**

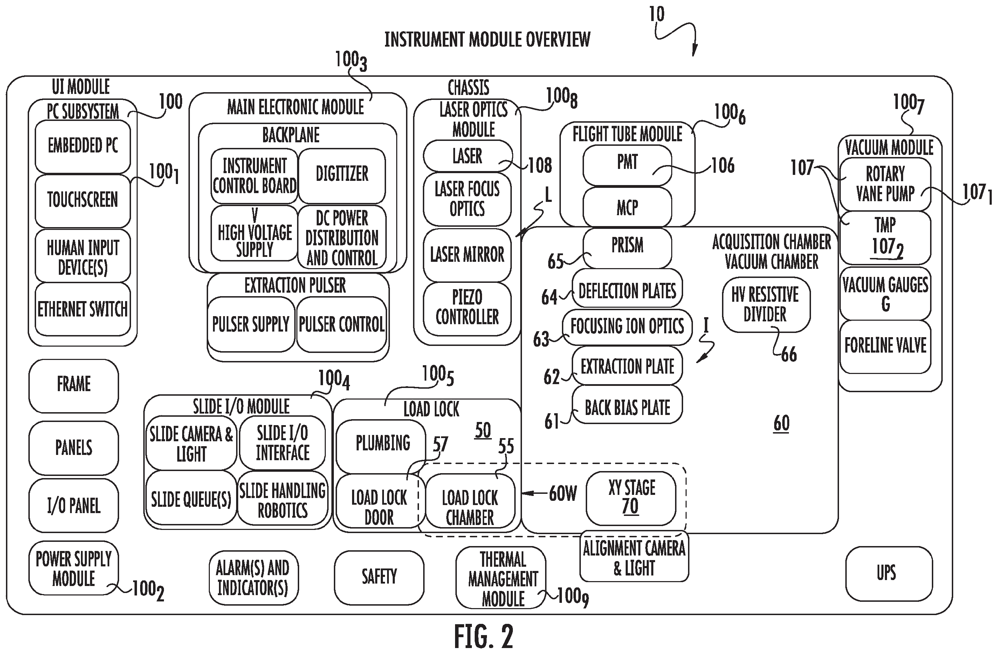

**FIG. 2** illustrates exemplary operational modules **100** (identified as modules **100n** with n being a numerical identifier) that can be included in or on the mass spectrometry system **10.** The modules **100** can include a User Interface (UI) module **100₁**, a power supply module **100₂**, a main electronics module **100₃** (with one or more high voltage supplies **V,** a digitizer, and an extraction pulser), a slide I/O module **100₄**, a load lock module **100₅**, a flight tube module **100₆**, a vacuum module **100₇** with at least one vacuum pump **107,** a laser optics module **100₈** with at least one laser **108,** and a thermal management module **100₉**. The at least one vacuum pump **107** can include a roughing vacuum pump **107₁** and a turbo pump **107₂**. The turbo pump **107₂** may only be directly connected to the acquisition vacuum chamber **60** while the roughing pump **107₁** can be directly connected to the load lock chamber **55c** and also, optionally, the acquisition vacuum chamber **60.**

The roughing pump **107₁** can reside below the turbo vacuum pump **107₂** in a relatively compact interior space.

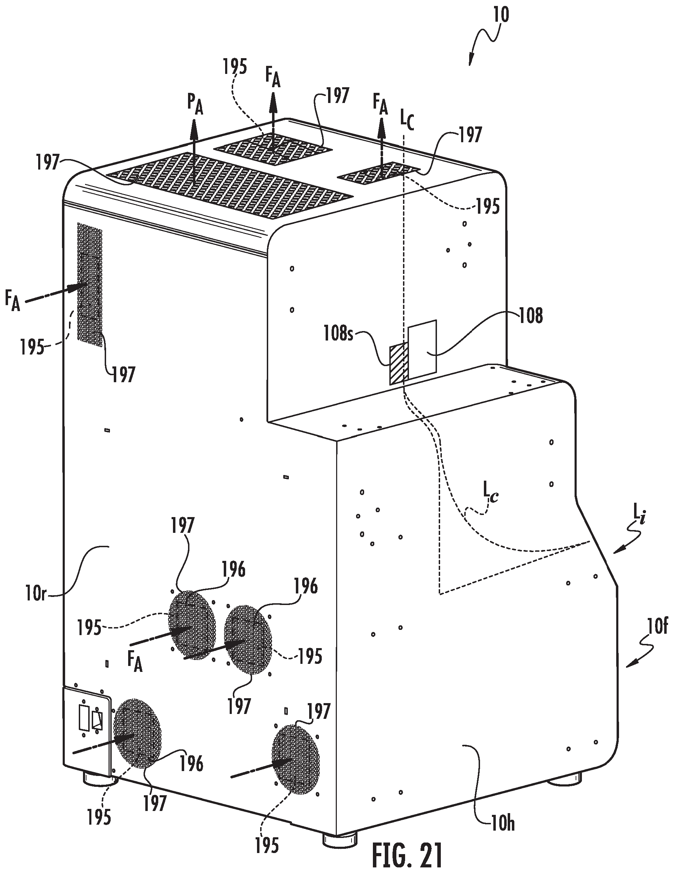

As will be discussed further below with respect to **FIG. 21****,** the system or instrument **10** can be held at a positive pressure (outside the acquisition vacuum chamber **60** and load lock chamber **55** when under vacuum) to inhibit unfiltered external air from entering the instrument and/or inhibit contamination of samples from external sources while in the unit **10.** The term "positive pressure" refers to a pressure that is above atmospheric pressure external to the housing **10h** of the system **10** so that air flows out of ventilation vents and/or any openings in the skin or casing of the housing instead of in. Spaced apart fans **195 (****FIG. 21****)** in the housing **10h** of the system **10** can be used to generate the positive pressure and desired outflow air paths. Each fan **195** can include a filter to inhibit the ingress of any debris that may be in the incoming air.

As shown in **FIGS. 1C** and **2****,** for example, the load lock chamber **55** is attached to the **wall 60w** of the vacuum chamber **60.** The X-Y stage **70** is in the vacuum chamber **60** along with electronic operational components that guide generated ions or a laser beam, such as a back bias plate **61,** an extraction plate **62,** focusing ion optics **63,** deflection plates **64,** and a prism **65.** The vacuum chamber **60** may also contain a high voltage (HV) divider **66.** The prism **65** can guide the laser beam and one or more (typically all) of the plates **61, 62, 63, 64** can guide the generated ions as is well known to those of skill in the art. In **FIG. 2****,** the laser optics are generally referred to as **"L"** and the ion optics are generally referred to as **"I".**

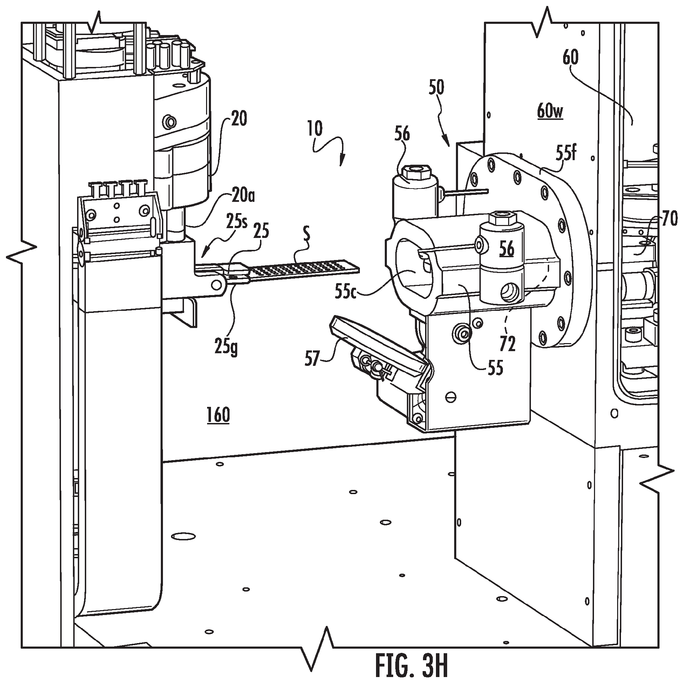

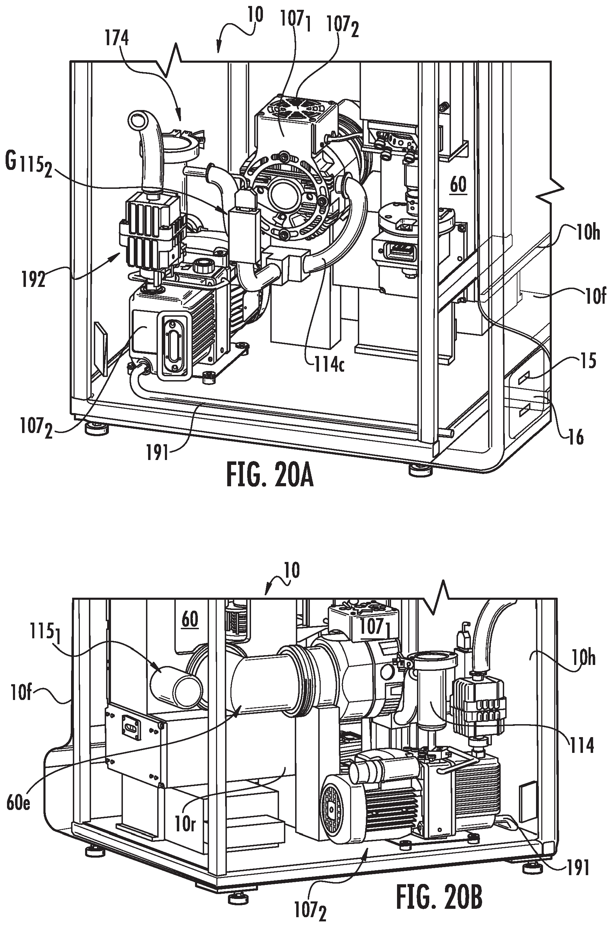

As shown, for example, in **FIG. 3H****,** and as will be discussed further below, the load lock chamber assembly **50** has a load lock chamber **55** with an open channel **55c** that can slidably receive a slide **S** and that can be sealably closed. The load lock chamber **55** can be placed under vacuum (or vented) via one or more valves **56** in fluid communication with the channel **55c** and allow a slide **S** to be input into (and removed from) the acquisition vacuum chamber **60** without the vacuum chamber **60** losing vacuum or with a small amount of pressure loss. In the embodiment shown in **FIG. 3H****,** for example, there are two dedicated valves **56,** one for venting and one for connection to the vacuum source **107** (**FIG. 20B****,** for example **107₁**, a roughing pump). However, a two-way or three-way valve can be used to carry out the venting and evacuation (not shown).

**FIGS. 3A****-****FIG. 3H** illustrate the robot **20** and slide holder **25** at various positions for intake of a sample slide **S** and transfer to a vacuum chamber **60,** typically via a load lock chamber **55.**

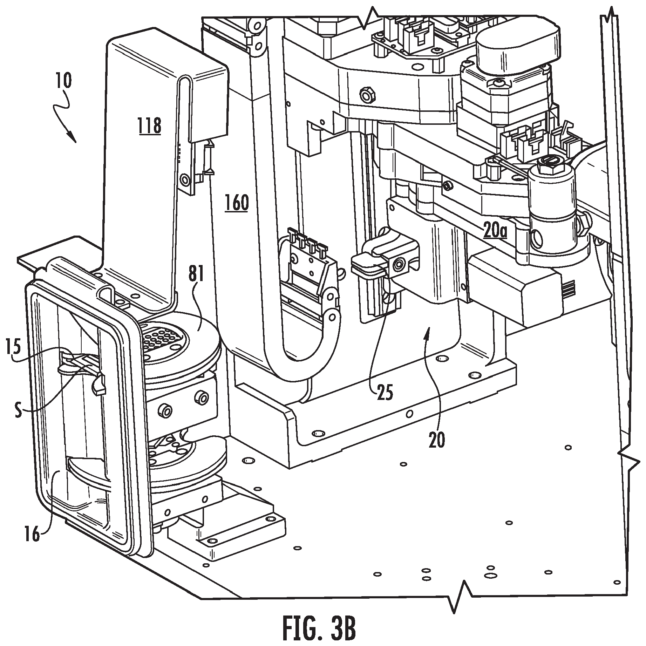

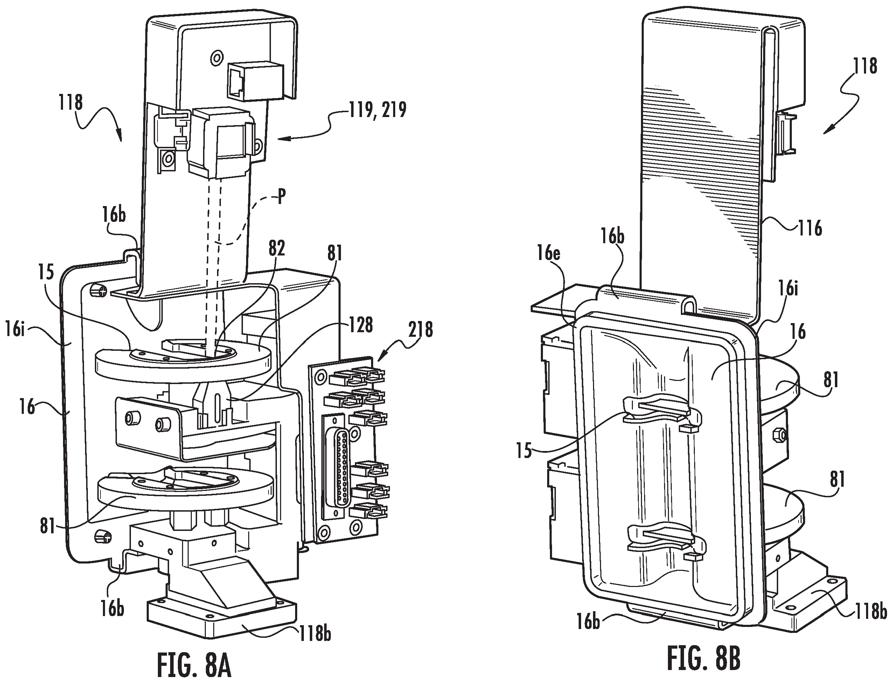

**FIG. 3A** illustrates an intake of a slide **S** into port **15** which may be carried out automatically via an external mechanism or via a user's manual insertion. The port **15** can be aligned with a channel **82** in a rotatable carousel **81.** There can be a plurality of ports **15,** shown as vertically aligned first and second ports in **FIG. 3A** (but again a single port per **FIG. 1A** or more than two ports **15** may be used). Referring to **FIG. 3B****,** a slide presence sensor **128 (****FIGS. 8A****,** **9A****,** **10A, 10B****)** detects the presence of a slide **S** in the channel **82** of the carousel **81** to activate the rotational intake of the carousel **81** and next sequence of actions.

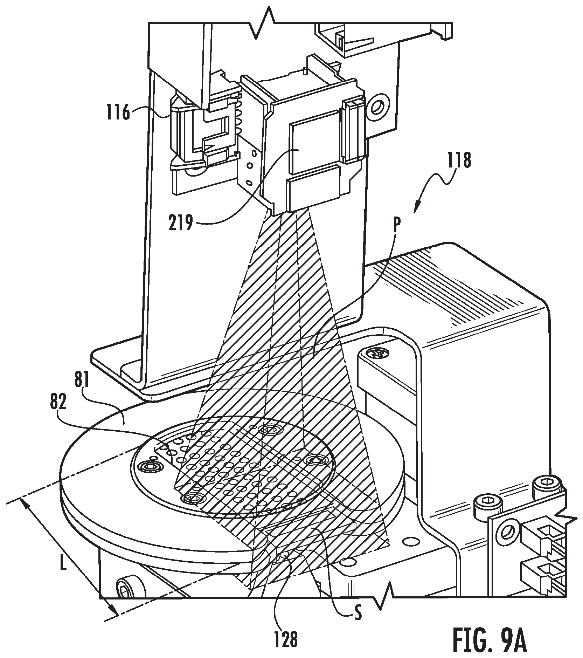

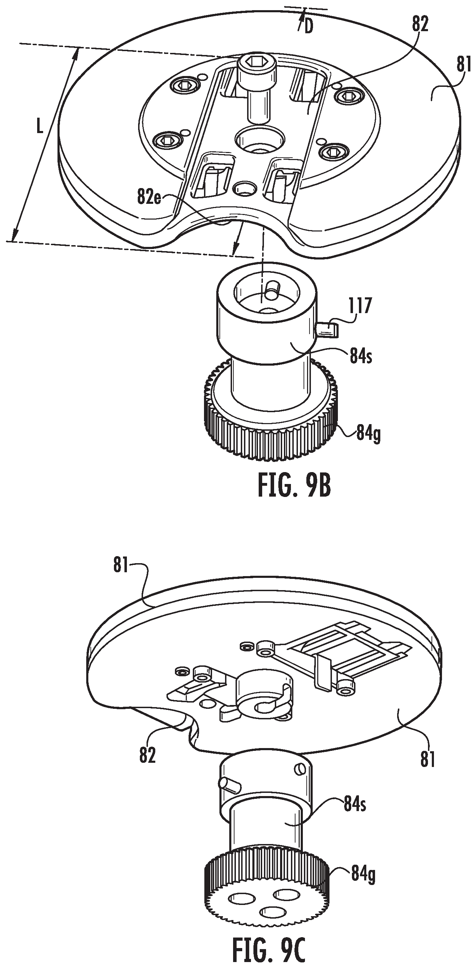

The mass spectrometer system **10** (or other instrument) can be configured to have a slide input/output (I/O) interface module **118** that provides at least one rotatable carousel **81.** As shown, the carousel **81** can have a single channel **82** for holding a single slide **S** at any one time. The slide holding channel **82** can have a length **L (****FIGS. 9A****, 9B)** that is between 50% -90% of the outer diameter of the carousel **81.** This single channel configuration and length used with a rotational carousel **81can** allow for a relatively compact interface/input profile, advantageously reducing the footprint of the instrument **10.**

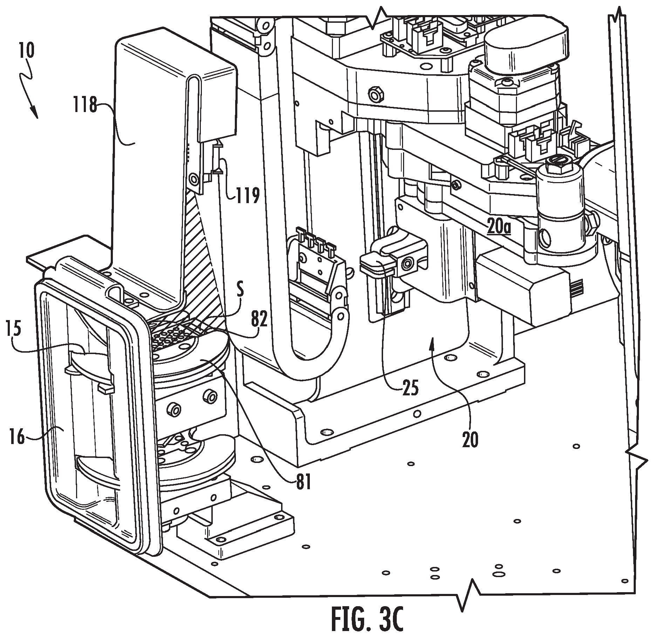

Referring to **FIG. 3C****,** the carousel **81** can rotate about 180 degrees to place the slide **S** in an interior compartment **160** of the system **10** and a scanner **119** can scan the slide **S** for relevant data, typically via a machine readable optical label such as a 2-D matrix code (which may be a Quick Response "QR^{®}" code) or a bar-code, for example.

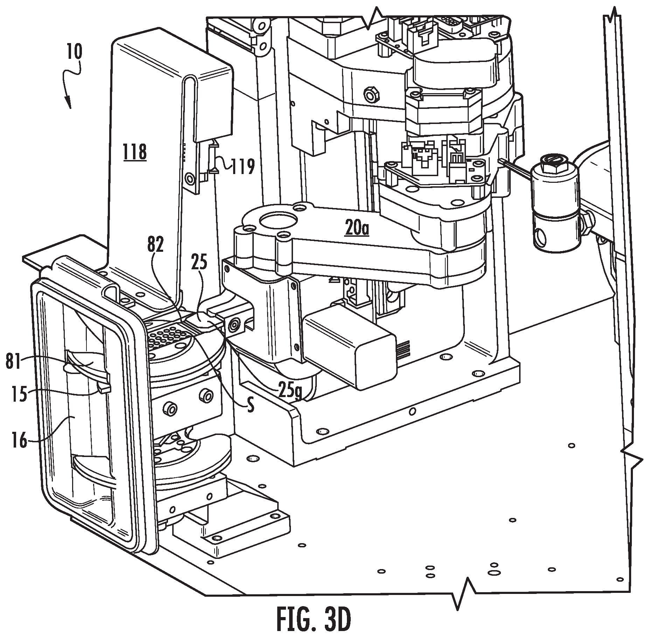

Referring to **FIG. 3D****,** the robot **20** can extend and allow the slide holder **25** with grip **25g** to engage an end portion of the slide **S** while held on the carousel **81.**

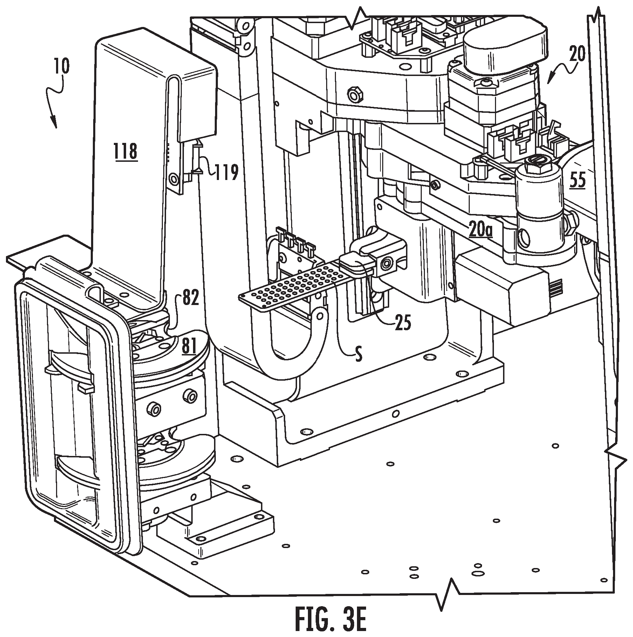

**FIG. 3E** illustrates that the robot **20** can then move the slide **S** off the carousel **81.** Acquisition groups can be imaged. An acquisition group is a subset of sample spots on the slide. Each slide contains a plurality of groups of sample spots, typically between 10-100 spots in two-ten groups, such as about 48 sample spots, arranged in three groups of 16 spots each. Each group has a center spot, which can be identified as a QC spot that can be used for calibration and quality check. As the slide is removed from the input carousel, the robot pauses at predefined positions in order to image each group because the field of view may not contain the entire slide. The slide presence sensor **128** now identifies a "no slide" status on the carousel **81.** The slide input into the instrument **10** is complete and the slide S can be moved to internal storage or directly to the load lock chamber **55.** The internal compartment **160** can be held at a positive pressure during operation.

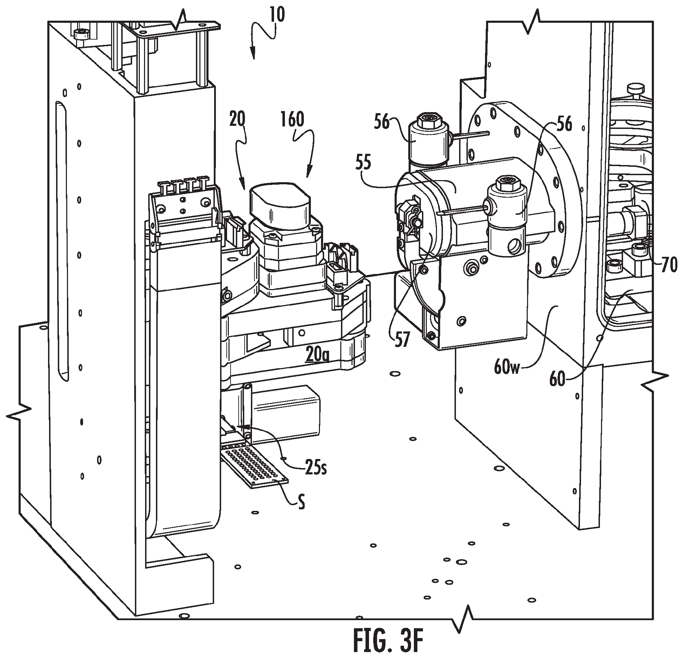

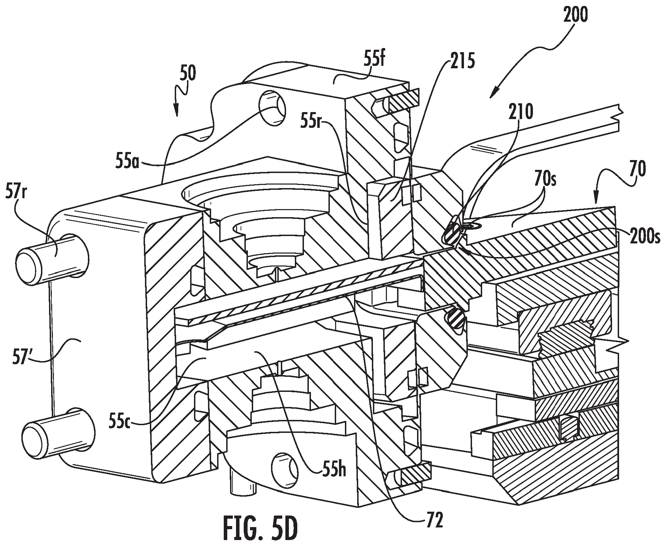

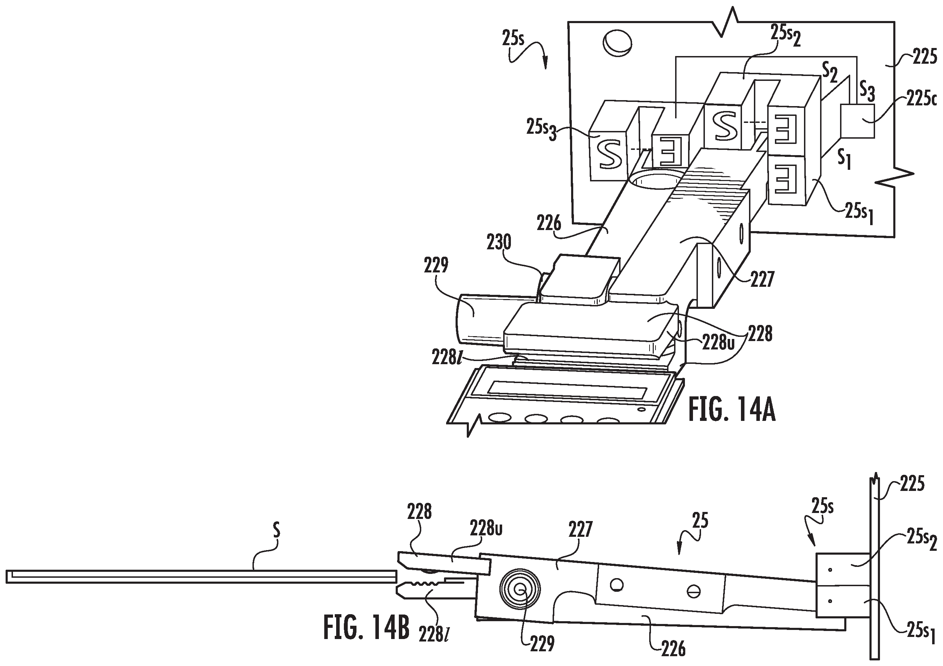

As shown in **FIG. 3F****,** and as will be discussed further below, the at least one grip sensor **25s** can include first, second and third sensors, **25s₁**, **25s₂**, **25s₃ (****FIGS. 14A, 14B****,** for example) of the slide holder **25** can indicate a slide S is present and ready for subsequent transport in the instrument **10.** The door **57** of the load lock chamber **55** may be closed as shown or open if ready for slide input, with the other side of the chamber **55** sealed by slide holder **72** of the X-Y stage **70** as shown in **FIG. 3H** (**FIG. 5D** shows the slide holder in the chamber **55**).

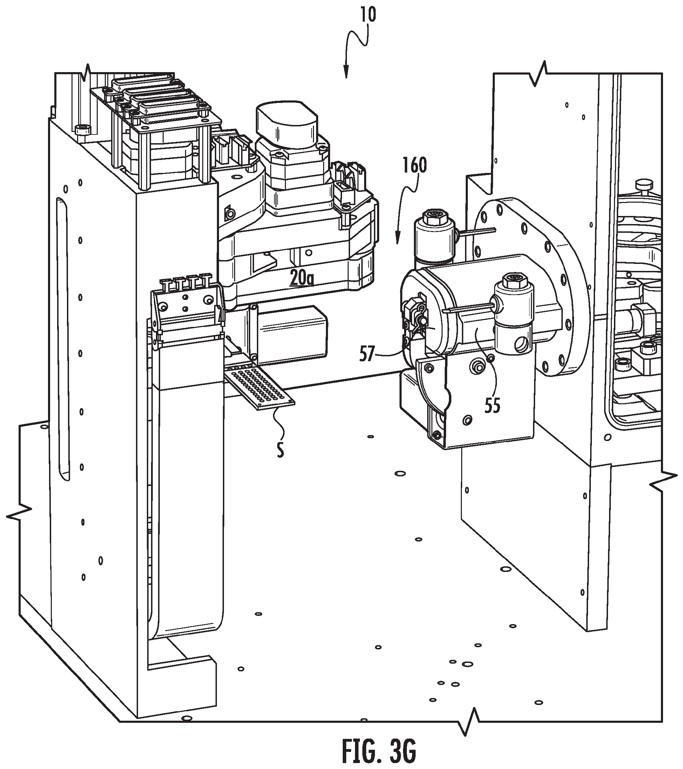

Referring to **FIG. 3G****,** the arm **20a** of the robot can be moved up as shown (or down) to a transfer position in line with the load lock chamber **55.**

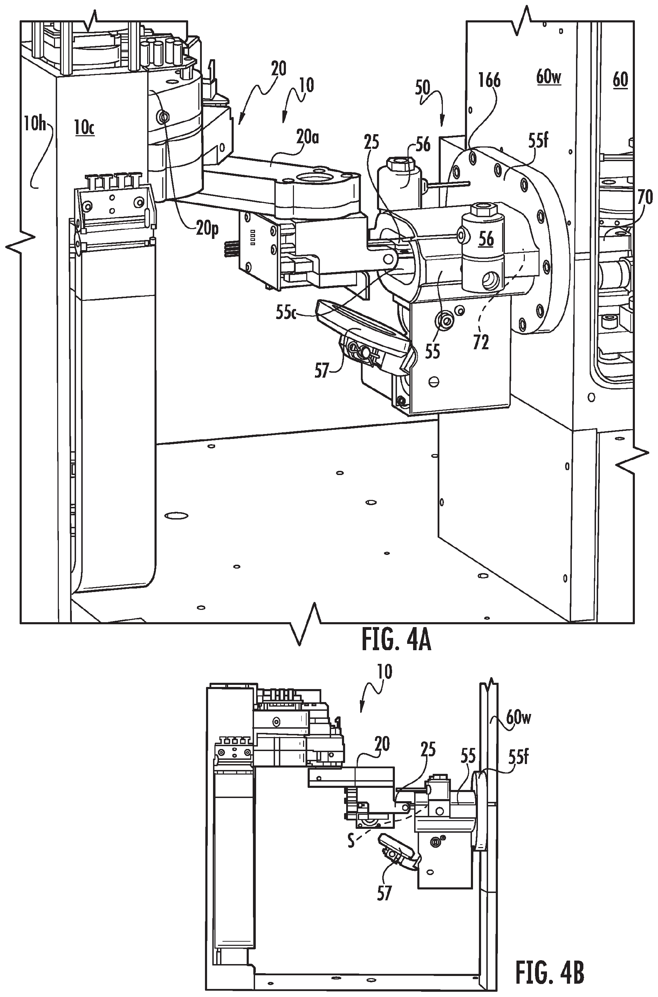

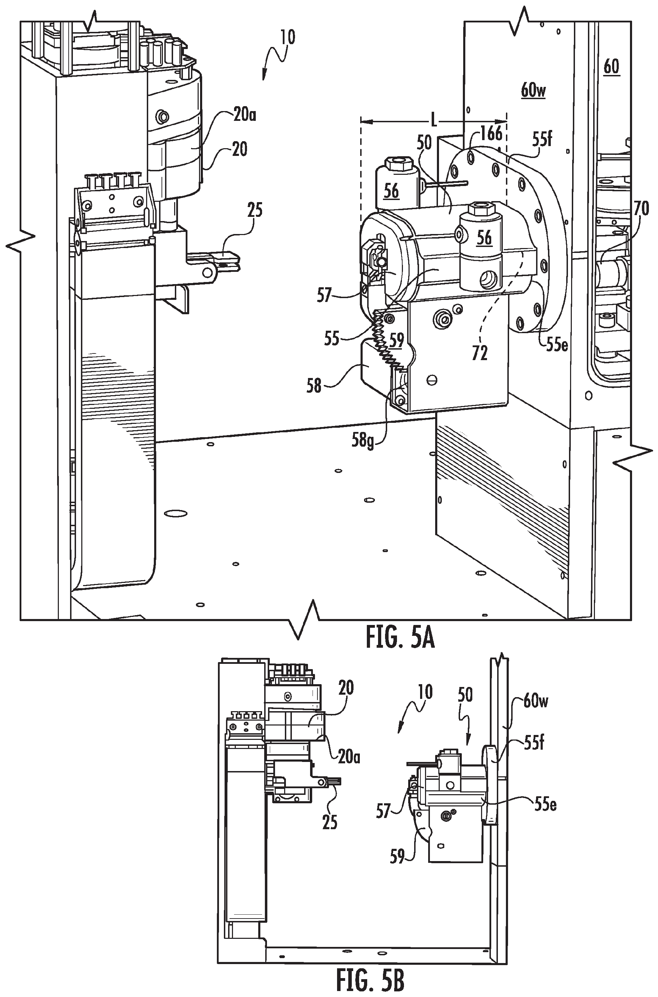

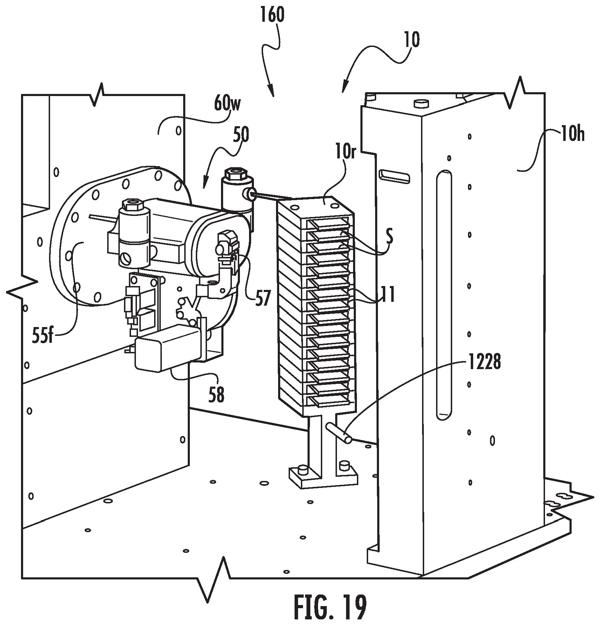

**FIG. 3H** illustrates the slide **S** at a transfer height ready for load lock handoff with a door **57** of the load lock member assembly **50** open, exposing the open channel **55c.** The slide holder **72** of the X-Y stage **70 (****FIGS. 19****,** **20A, 20B****,** for example) is already in position in the chamber **55,** sealed to the load lock chamber assembly **50,** to maintain the vacuum pressure in the vacuum chamber **60.** The arm **20a** of the robot **20** can be rotated and positioned at the transfer height in a z-axis direction relative to its input position for this operational configuration. The grip **25g** of the slide holder **25** can hold the slide **S** such that at least a major length of the slide extends forward of the grip **25g** and is free. This configuration can facilitate insertion of the slide **S** into the aligned slide holder **72** of the X-Y stage **70 (****FIGS. 4A, 4B****,** **5D****).** The slide holder **25** (i.e., gripper **25g)** can release the slide **S** to the X-Y stage slide holder **72** and retract to a home position **(****FIGS. 5A****, 5B).**

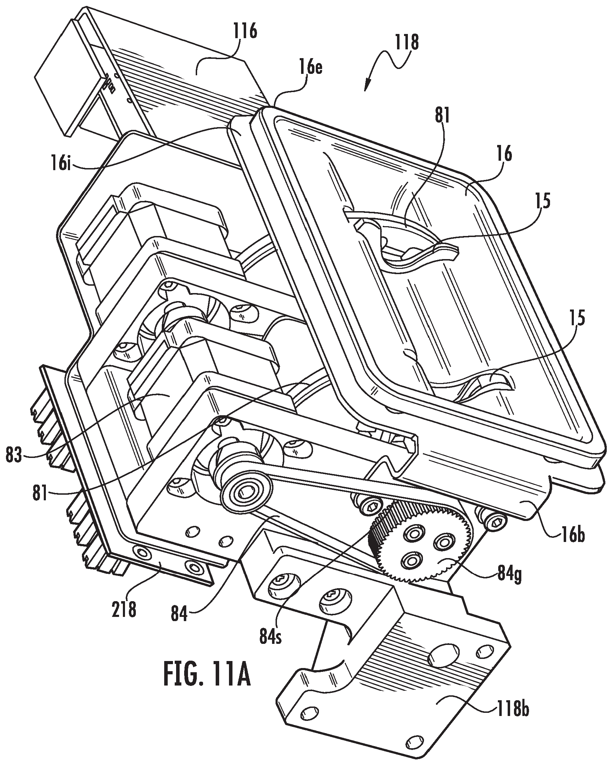

**FIGS. 4A** and **4B** illustrate a slide transfer configuration/position of the robot arm **20a** and slide holder **25.** In operation, with the X-Y stage **70** in position for slide transfer and with the slide holder **72** extended into the channel **55c** of the load lock chamber **55,** a vacuum seal 200s **(****FIG. 5D****)** of a vacuum seal assembly cartridge **200 (****FIG. 5D****)** attached to the load lock chamber is engaged with the seal interface **72s** of the slide holder **72** and the door **57** is closed and sealed shut on the end of the chamber **55c** facing the robot **20** and/or front of the housing **10f.** A first one of the valves **56** can open and vent the load lock chamber **55** to atmosphere, the load lock door **57** can then open, and the slide handler arm **20a** can extend the slide holder **25** into the chamber **55c** and can release the slide **S** to the slide holder **72 (****FIG. 11A****)** of the X-Y stage **70.**

Referring to **FIGS. 4A, 4B****,** **5A, 5B** and **5D****,** for example, the load lock chamber **55** can have a relatively compact configuration with a length **L** extending between the slide insertion/extraction end adjacent the door **57** to the end **55e** at the wall **60w** of the vacuum chamber **60** (i.e., at the front or inner surface of the flange **55f** facing the wall **60w)** that is between about 75 mm and about 95 mm and a height **H** that is between about 40 mm and 60 mm. The open channel **55c** can be oblong or elongate laterally with a height that is less than a width.

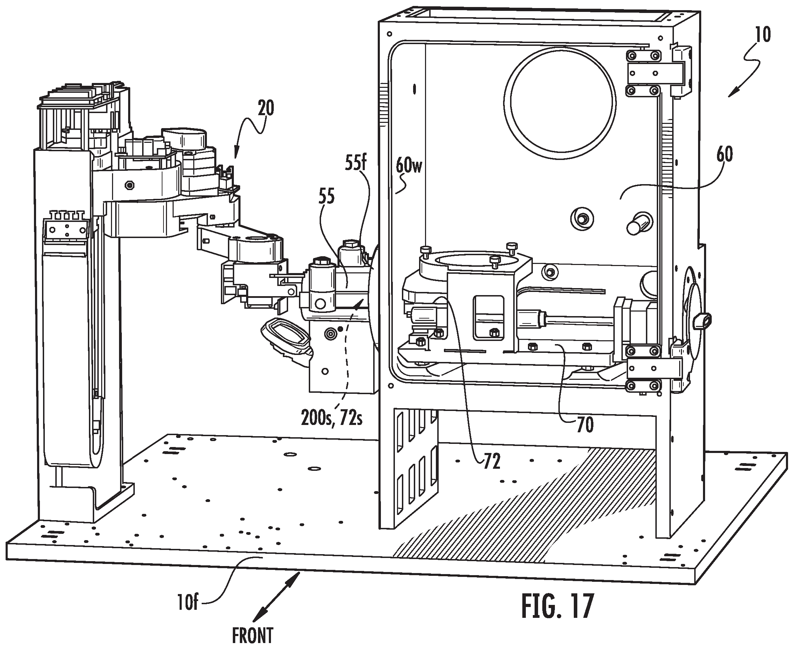

As shown in **FIG. 5D****,** the seal assembly cartridge **200** can have at least one O-ring **210** and a seal housing **215** of the seal assembly cartridge **200** can reside in a recess **55r** in the primary housing **55h** of the load lock chamber **55.** A flange **55f** of the load lock housing **50h** can extend about the chamber **55c** and the recess **55r** and attach to a wall **60w** of the vacuum chamber **60** via fixation members **166 (****FIGS. 4A****, 5A)** extending through apertures **55a** in the flange **55f.** The slide seal interface **72s** can engage the O-ring **210** to form a vacuum tight seal with the seal interface **200s** of the seal cartridge **200s (****FIG. 17****)** when the slide holder **72** is in position in the load lock chamber **55.** **FIG. 5D** also illustrates that the door **57'** can be mounted on mounting members **57r** which can comprise rails, threaded members such as thumbscrews and the like to be able to slide to sealably close.

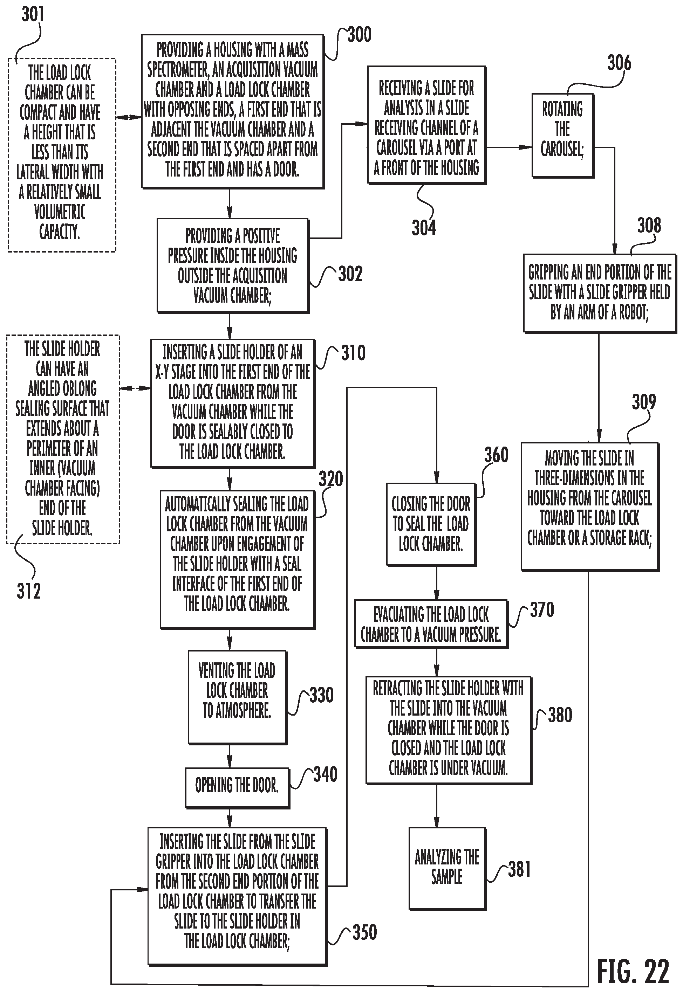

**FIGS. 5A** and **5B** illustrate another operational configuration of the robot **20,** the slide holder **25** and the load lock chamber assembly **50.** As shown, the arm **20a** with the slide handler **25** is retracted away from the load lock chamber **55** and the door **57** is sealably closed against the load lock chamber **55.** A second one of the valves **56** is opened and the load lock chamber **55** can be pumped/evacuated via vacuum pump (i.e., pump **107₂**, **FIG. 22B)** to a desired pressure, typically at a pressure within a suitable range of the vacuum chamber **60.**

Vacuum gauges **G** (which can be in module **100₇**, **FIG. 2A)** can be used to automate the monitoring and cause the X-Y stage **70** to move the slide holder **72** into the vacuum chamber **60** when a desired load lock pressure is achieved. Once vacuum is at an appropriate level in the load lock chamber **55,** the X-Y stage **70** can remove the slide holder **72** from the load lock chamber **55** into the vacuum chamber **60** while the door **57** remains sealably closed against the load lock chamber **55.**

In some embodiments, there can be a step in vacuum pressure between the load lock chamber **55** in the load/seal position and the vacuum chamber **60.** For example, a sample slide **S** is loaded into the load lock chamber **55** from outside while the load lock chamber **55** is open to atmosphere with the door **57** open and is also sealed from the acquisition vacuum chamber **60.** The load lock chamber **55** is then sealed from the outside by closing the door **57** and roughing down (evacuating) to an intermediate pressure level by the opening of a valve **56** on the load lock chamber assembly **50** (which is typically lower than atmospheric pressure but higher than the pressure in the acquisition chamber **60**). The valve **56** is then closed. The load lock chamber **55** is sealed from both outside and from the acquisition vacuum chamber **60** placing the load lock chamber **55** at an intermediate pressure, while acquisition chamber is at a lower operating pressure. The sample stage **70** is retracted into the acquisition chamber **60,** breaking the seal between the load lock chamber **55** and the acquisition chamber **60.** The two chambers **55, 60** are no longer fluidically separate, so there can be a momentary spike in pressure in the acquisition chamber **60** due to an inrush of air from the previously-sealed load lock chamber **55.** After a relatively short amount of time, the pressure in the vacuum chamber **60** reaches an operating level once again.

However, in other embodiments, the load lock chamber **55** can be evacuated to a level matching or below the pressure acquisition chamber **60.**

Referring again to **FIGS. 5A-5D****,** the load lock chamber assembly **50** can be mounted to a wall **60w** of the vacuum chamber **60** via the flange **55f.** The flange **55f** can extend outward a distance about a perimeter of an end **55e** of the load lock chamber **55** facing the acquisition vacuum chamber **60.** Typically, the flange **55f** is mounted to the outer surface of the wall **60w,** optionally directly mounted to the wall **60w.** The wall **60w** can face the front **wall 10f** of the housing **10h.**

The door **57** of the load lock chamber assembly **50** can be an automatic door that is operated without requiring user input and/or manual force. As shown in **FIGS. 5A-****5C,** for example, the door **57** and load lock chamber **55** can be elongated laterally relative to their height. The door **57** can have an inner surface with a seal member **57s** such as an O-ring or gasket. The load lock chamber assembly **50** can include a stepper motor **58** with a shaft **58s** that rotates a first gear **58g** that engages a second gear **59** to automatically open and close the door **57.**

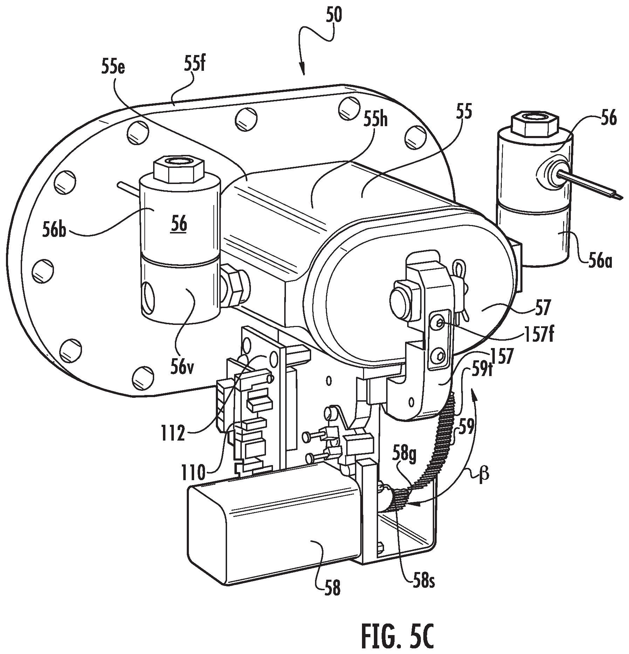

As shown in **FIG. 5C****,** a control circuit **110,** which can be at least partially on a printed circuit board **112** that can be mounted adjacent the step motor **58** and can provide the automatic electronic control for opening and closing the at least one valve **56** and opening and closing the door **57.** The stepper motor **58** can be a frame size NEMA 11 compact stepper motor (body length 2.01 inches with a holding torque of 0.12 N-m and a speed of between 10-22 rotations per second), optionally with a step angle of 1.8 degrees. The stepper motor **58** can be a compact stepper motor optionally model 211-20-02, available from Lin Engineering, LLC, Morgan Hill, CA.

The gears **58g** to **59** can have a 10-1 reduction. The door **57** can couple to a compliant flat blade spring or other compliant member (not shown) to facilitate that the door mates to the housing **55h** of the load lock chamber **55** with sufficient force to seal. As shown, a first valve **56** is a vacuum valve **56v** that is in fluid communication with a vacuum pump **(107, FIG. 2C).** The second valve **56** is an atmospheric vent valve **56a** that can connect to a filter (not shown). In some embodiments, the valve bodies **56b** can reside entirely external to the chamber housing **55h.** The valve bodies **56b** may be cylindrical.

As shown in **FIG. 5C****,** the second gear **59** can reside above the first gear **58g** and can have a semi-circular perimeter, typically with an angular extent β of between 45-180 degrees. In some embodiments, the second gear **59** has only three sides, two of which are perpendicular and with one of the three sides having gear teeth **59t** on an outer perimeter thereof with an angular extent of between 60-120 degrees, more typically about 90 degrees, that can rotate between first and second positions to open and close the door. As shown, the angular extent β is about 90 degrees between first and second positions to open and close the door **57** with an appropriate force to form a sufficient seal. The door **57** can have an arm **157** that is affixed to the second gear **59** via one or more fixation members **157f.**

It is noted that the example sequence shown in **FIGS. 3A-3H****, 4A** and **5A** can be altered as appropriate, such as, to remove a slide **S** after analysis to a storage rack **10r (****FIG. 21****)** inside the housing **10h** or to an exit port **15 (****FIGS. 1A****,** **1B****,** for example).

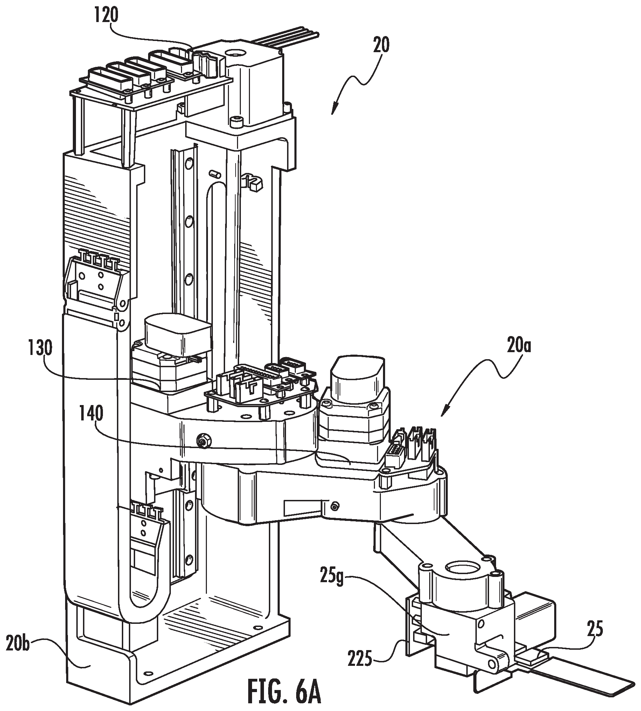

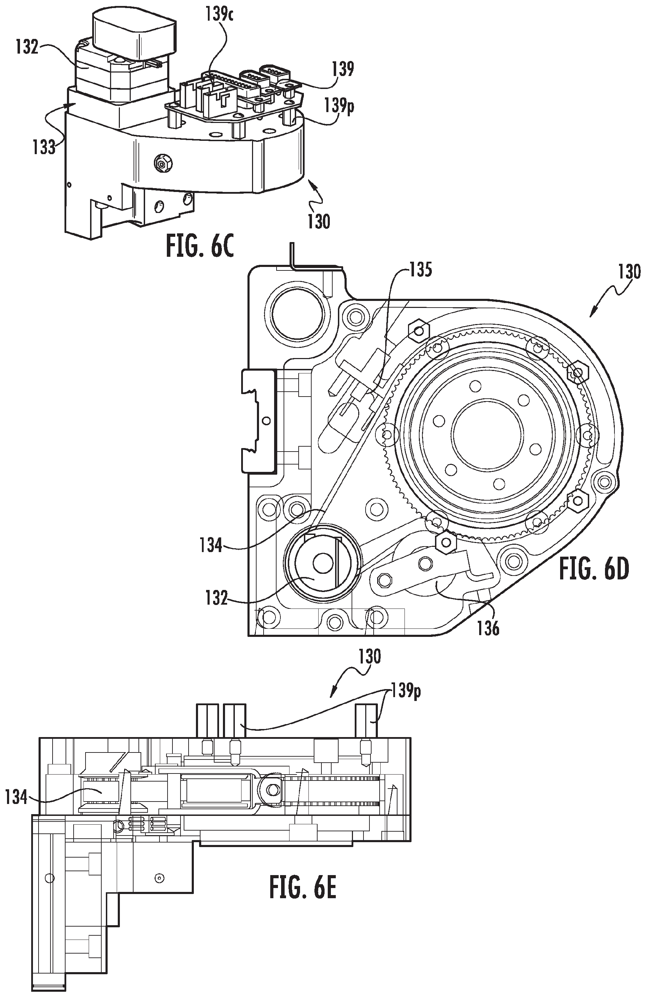

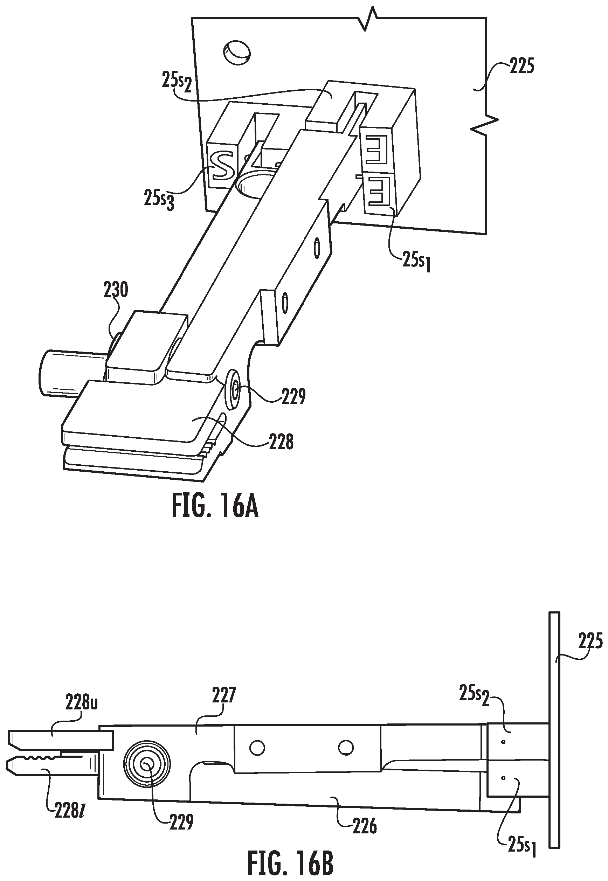

**FIG. 6A** illustrates an example robot **20** with the robot arm **20a** that includes a Z drive **120,** a theta drive **130,** an R-drive **140,** a slide gripper **25g,** and a mount **20b.** As shown, the slide gripper **25g** can be coupled to a PCB **225** that moves with the arm **20a** and has grip sensors **25s** that can be used to direct actions by the slide gripper **25g** *(see also,* **FIGS. 14A****, 14B-16A, 16B).**

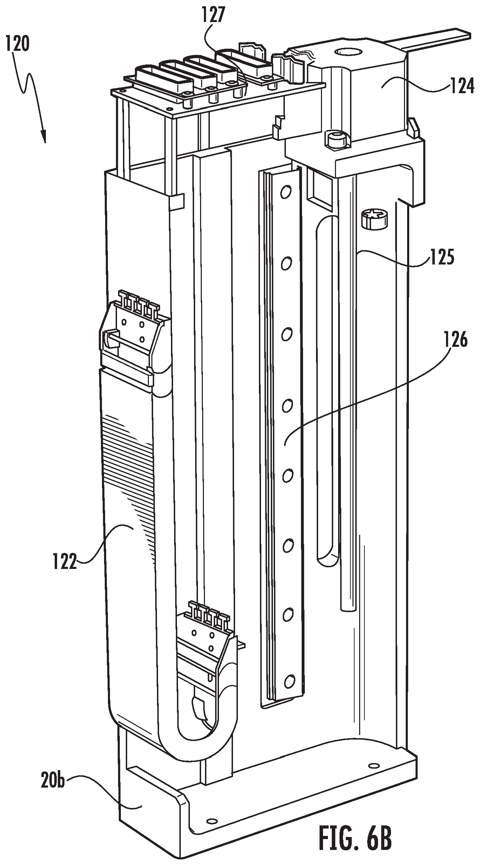

**FIG. 6B** illustrates the Z drive **120.** As shown, the Z-drive **120** can include a stepper motor **124** with a driven integrated leadscrew drive **125,** a high moment stiffness bearing rail and carriage **126,** a high-flex ribbon cable **122,** an integrated robot mount **20b** with Z-axis bearing mount, an interconnect PCB **127** on a top portion thereof, comprising electronic components such as optical encoders.

**FIGS. 6C-6E** illustrate an exemplary theta drive **130** with a stepper motor **132,** a planetary gearbox **133** (optionally a 5:1 gear reduction configuration), a belt drive **134,** which can be a 6 mm GT2 belt, an optical encoder and/or sensor **135** for positional input (i.e., for a theta drive home position), an integrated belt tensioner **136** and an interconnect PCB **139** held on posts **139p.** The interconnect PCB **139** can include electronic components **139c** that provide a Z e-chain input, a T motor, encoder and sensor input, an R output and a gripper output.

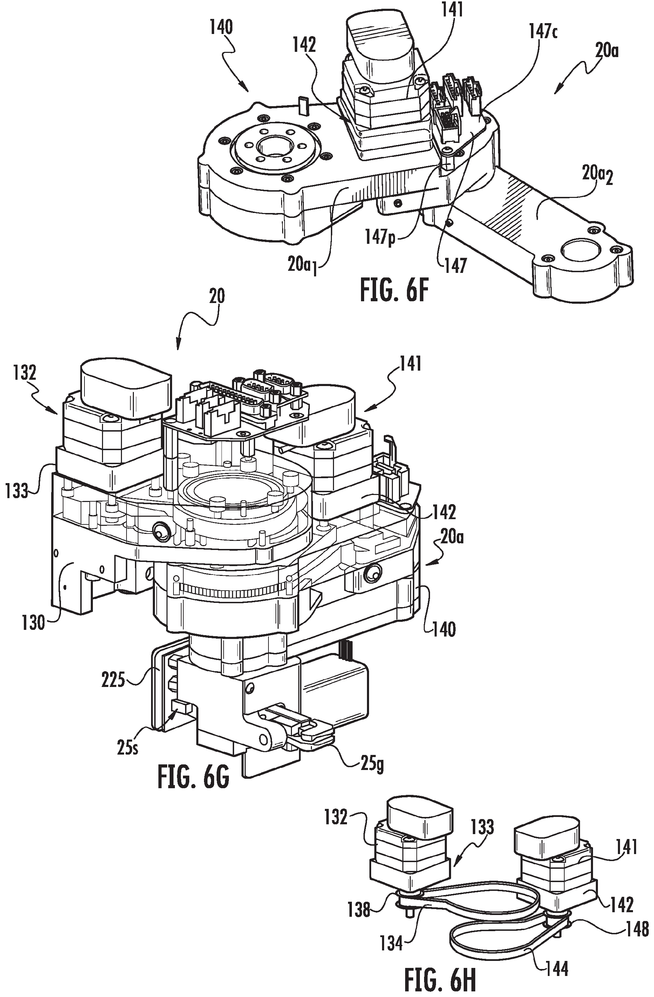

**FIG. 6F** illustrates cooperating upper and lower arm links **20a₁**, **20a₂** of the arm **20a.** The **R** drive **140** can include a stepper motor **141,** a planetary gearbox **142** (with the same gear reduction as the theta drive **130,** optionally 5:1), an optical encoder **143** for positional input (i.e., R home and/or closed-loop position control), a belt drive **144,** optionally also with an integrated belt tensioner), and an interconnect PCB **147** on posts **147p.** The interconnect PCB **147** can include electronic components **147c** which can provide a Z e-chain input, and an R motor, encoder and sensor and/or respective inputs. The upper arm **20a₁** can work like a planet gear and rotates around pulley attached to the Theta drive **130.** The motor **141** can rotate to extend the arm or retract the arm when the Theta drive **130** is held stationary by the Theta motor **132.**

**FIG. 6G** shows the robot **20** with the arm assembly R drive assembly **140** and the theta drive assembly **130** assembled with the arm assembly **20a.**

**FIG. 6H** illustrates a sub-assembly of the robot **20** with the arm **20a** and theta drive **130** and R drive **140.** Each motor and gearhead **132, 133** and **141, 142** can be coupled to a respective timing pulley, **138, 148,** such as a 22-tooth timing pulley. A hub can be mounted to the end of each gearhead assembly.

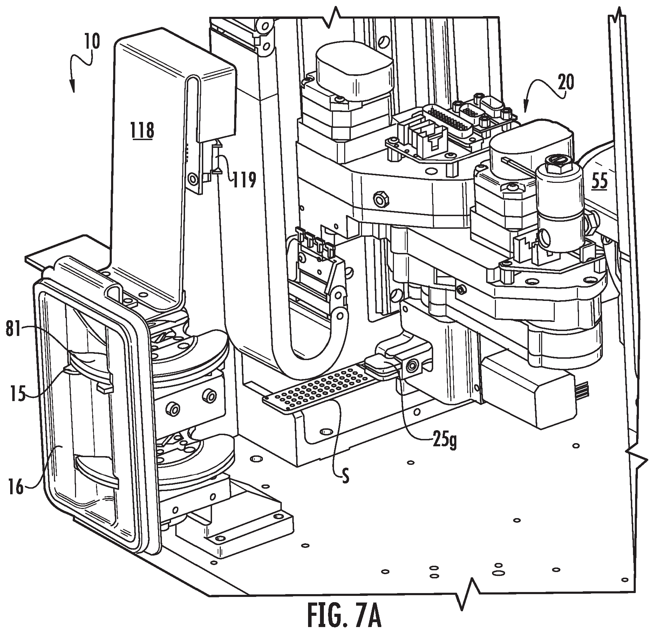

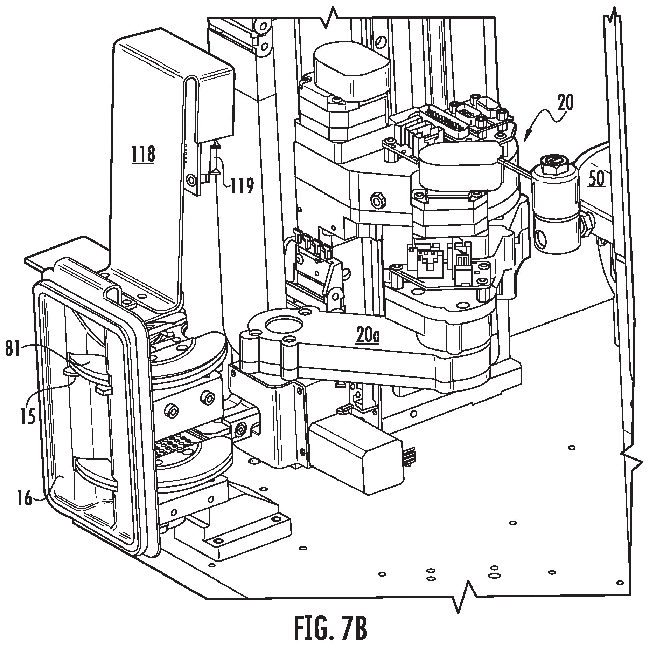

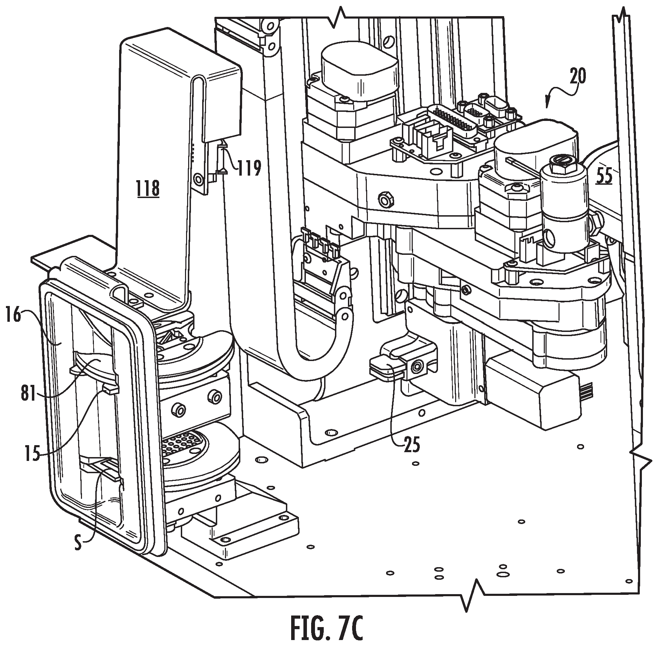

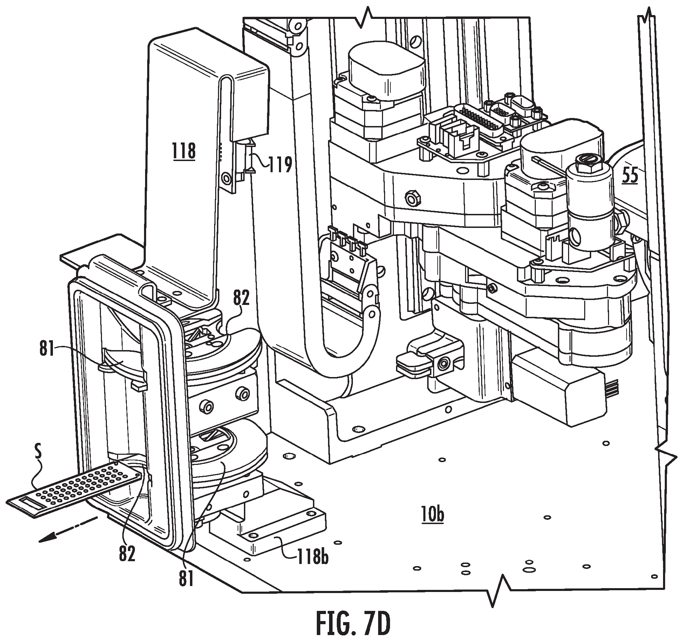

**FIGS. 7A-7D** illustrate an exemplary removal sequence of a respective slide **S,** post analysis using the at least one carousel **81** with the slide holding channel **82** of the slide input/output (I/O) interface module **118,** and port **15** held by a removable bezel plate **16** on the front of the instrument **10f.** The carousel **81** can rotate about 180 degrees from the intake position with the open end of the slide holding channel **82** facing inward shown in **FIGS. 7A****,** **7B** to allow the analyzed slide **S** to exit the instrument **(****FIGS. 7C****, 7D).** The robot **20** can move the robot arm **20a** independent of the action of the carousel **81.**

**FIGS. 8A, 8B** and **9A** illustrate an example slide input/output (I/O) module **118.** **FIG. 8A** illustrates that the module **118** can include at least one carousel **81,** a slide presence sensor **128,** a scanner **119,** which can be a camera **219,** and an interconnect PCB **218.** The camera **219** can be held above the at least one carousel **81** and can have a downwardly extending optic path **P** that can include an internal end portion of the slide holding channel **82** of the carousel **81.** **FIG. 9A** illustrates that the camera **219** can image a major portion of a length and width dimension of a respective slide S with the slide **S** oriented with the open end facing inward under the camera **219.** The field of view of the camera **219** can be sufficient to image both slide-specific data (i.e., bar-code or QR-code) and slide acquisition group data.

**FIGS. 9B** and **9C** are enlarged views of the carousel **81** with the drive shaft **84s** and drive gear **84g.** As will be discussed below, the shaft **84s** can have a hard-stop pin **117.** The channel **82** can have a length **L** that is more than a major portion of the diameter of the carousel **81.** The channel **82** can have an open end **82e** that slidably receives respective slides **S** and the open end **82e** can have an inwardly extending arcuate shape. The channel **82** can be a single channel that extends from one edge across a center of the carousel to a diametrically opposing side portion, extending over the drive shaft **84s.**

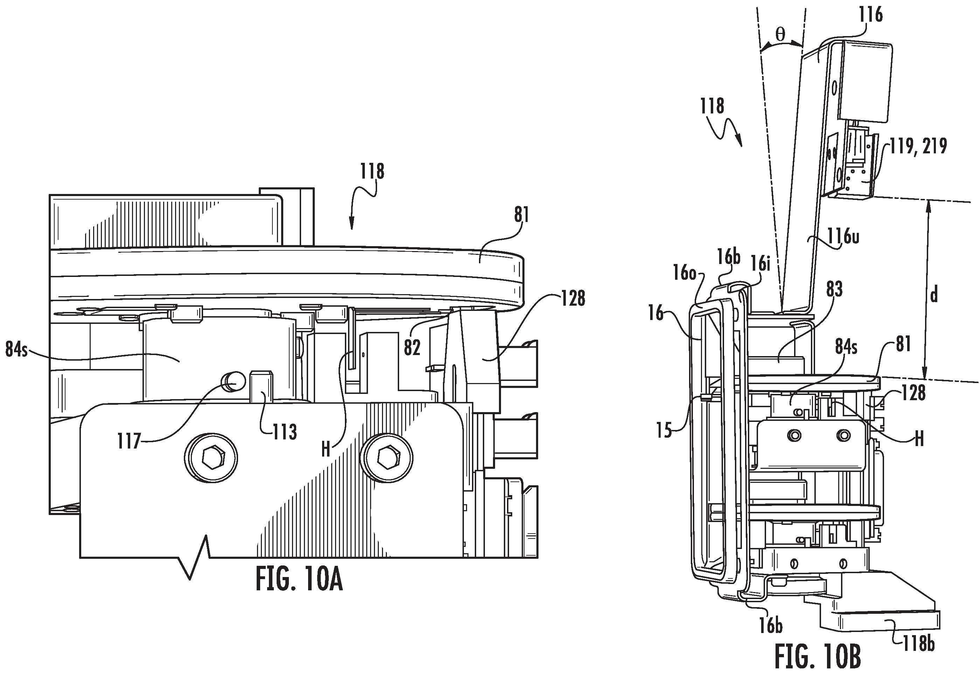

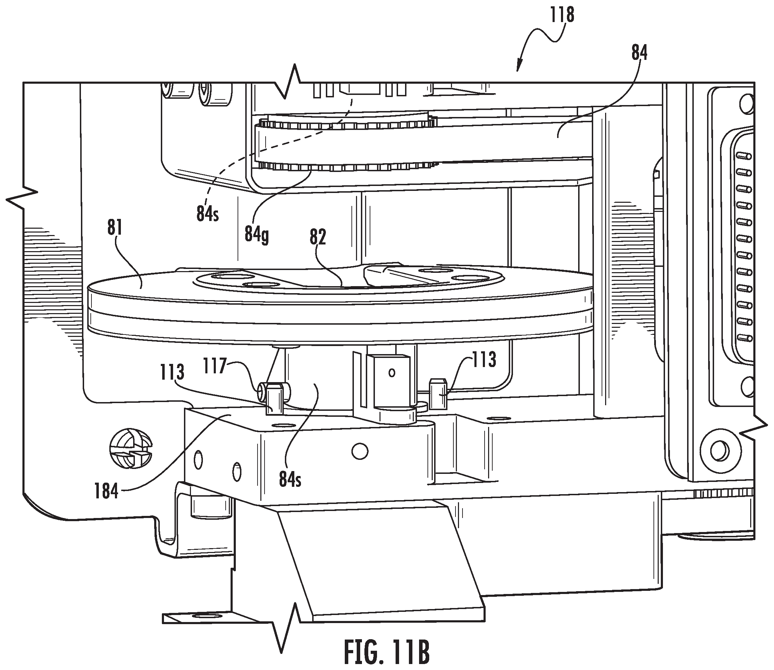

Referring to **FIGS. 10A, 10B****,** **11A****,** and **11B****,** the I/O module **118** can include at least one drive motor **83** that is attached to a drive belt **84.** The drive belt **84** is connected to the gear **84g** that is attached to the drive shaft **84s** that is attached to the carousel **81.** The slide presence sensor **128** can reside under or over (shown as under in **FIG. 10A****)** an inner end portion of the carousel **81.** The module **118** can include a home sensor **H.**

As show in **FIGS. 10A** and **11B****,** the carousel drive shaft **84s** can include a laterally outwardly extending pin **117** and the carousel drive plate **184** can include upwardly extending pins **113** that cooperate with pin **117** to physically limit the rotational motion of the carousel **81** to be in a range of 180-190 degrees, typically about 188 degrees.

Referring to **FIGS. 10B** and **11A****,** the module **118** and/ or components thereof can be releasably attached to the housing **10h (****FIG. 1B****)** to allow for ease of maintenance and repair. In operative position as shown in **FIGS. 1B** and **1C** (without the front housing in **FIG. 1C****),** the module **118** can reside at a front corner of the housing **10h** with the bezel face plate **16** external to the housing **10h.** As shown, the module **118** can include an upper bracket θ attached to the bezel face plate **16** that, in position, is inside the front **10f** of the housing **10h.**

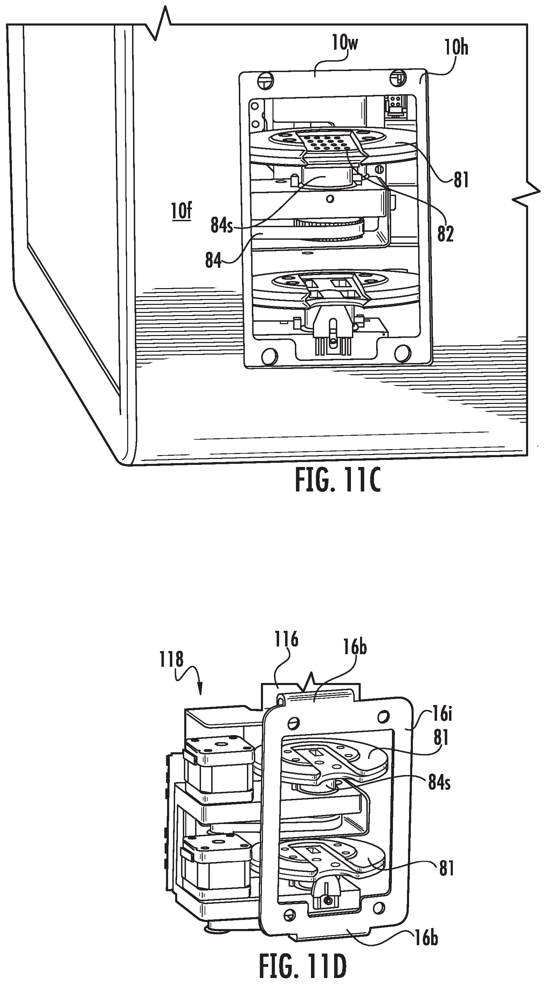

Referring to **FIGs. 10B** and **11D****,** the bezel face plate **16** can be held by a bracket **16i** that is coupled to an upper bracket member or segment **116** that can extend inwardly at an angle from vertical, theta (θ) that is between 5-45 degrees, more typically 10-30 degrees. The upper bracket or segment **116** can have a height sufficient to place the lower end of the camera **219** a distance "d" from the slide channel **82** of the carousel **81** that is between 3-6 inches. This angle and/or distance can help position the scanner **119** and/or camera **219** at a desired position to be able to capture the data from slides at intake, for example. The module **118** can be configured to allow the carousel(s) **81** to be removed for cleaning via a front opening in the housing under the bezel faceplate **16.** The bezel face plate **16** can detachably attach to the front **10f** of the housing **10h.**

As shown in **FIGS. 8A, 8B****,** **10B** and **11A****,** the bezel plate **16** can be an external rectangular bezel face plate **16e** with one or more slide ports **15** coupled to the bracket **16i** which is shown as an adjacent (internal) rectangular bracket. The bracket **16i** can have inwardly extending upper and lower curvilinear bracket segments **16b** that reside above and below, respectively, the external bezel plate **16.** The bracket segments **16b** can attach the bezel plate **16** to the module **118.** The base of the module **118b** can reside directly or indirectly on the floor **10b** of the enclosure **(****FIGS. 1C****,** **7D****,** for example).

**FIG. 11C** illustrates the housing **10h** of the instrument **10** with the bezel face plate **16** removed. The mounting members (i.e., screws) for the carousel **81** can be removed via the open access window **10w** once the bezel face plate **16** is removed. The carousel **81** can be lifted off of the shaft/spindle **84s** and the carousel **81** can be turned and removed out the front of the housing **10f** for cleaning, refurbishment, repair or replacement.

**FIG. 11D** illustrates the module **118** without the bezel face plate **16.** The internal bracket **16i** can have an open medial window **10w** which can be a rectangular space/region. The bezel faceplate **16** can have a width between 4-8 inches and a height between 5-10 inches, typically with the height being greater than the width and the open window **10w** can be (slightly) smaller in both dimensions. The bezel bracket **16i** can reside flush with the front wall of the housing, typically adjacent and inside the instrument with the housing **10h** and window **10w** between the internal bracket **16i** and the bezel face plate **16.**

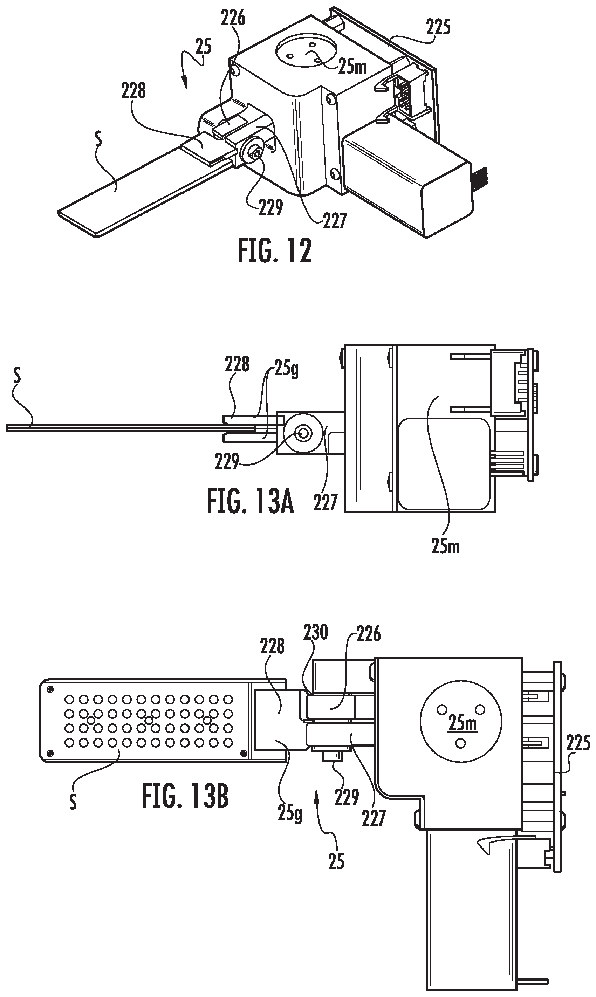

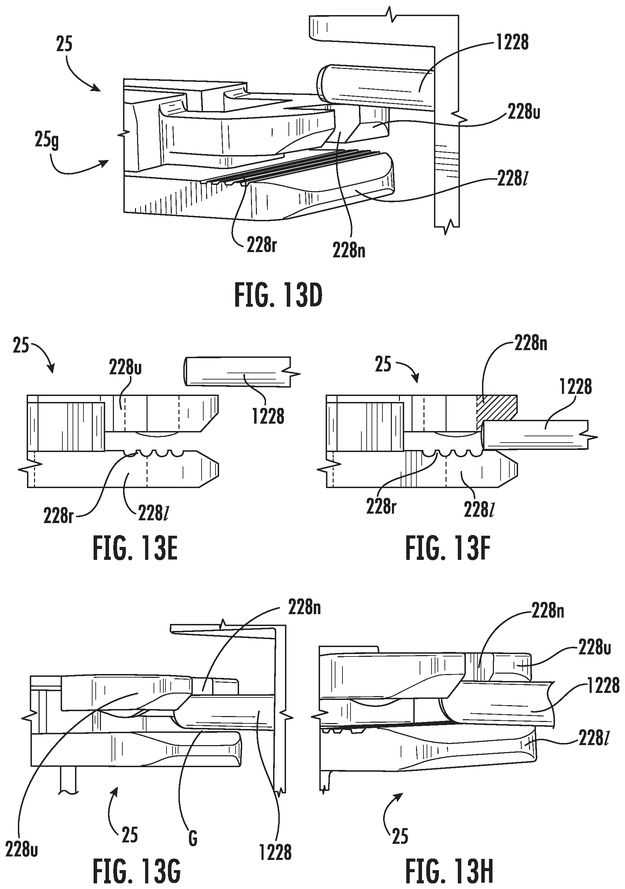

Referring now to **FIGS. 12, 13A** and **13B****,** an exemplary slide holder **25** with slide gripper **25g** is shown. The gripper **25g** can include first and second parallel slide gripper arms **226, 227** that are coupled to a gripper mouth **228** with upper and lower jaws **228u, *228l* (****FIG. 14B****)** that can securely grip and release a respective slide **S.** The gripper arms **226, 227** are coupled to one or more sensors **25s** which are typically coupled to the PCB **225** to control the grip and release actions of the gripper **25g.** The gripper arms **226, 227** can be held by a laterally extending shaft **229** that allow the gripper arms **226, 227** to pivot to open and close the gripper jaws **228u, 228*l***. One arm **226** is attached to the lower jaw **228*l*** and the other arm **227** is attached to the upper jaw **228u.**

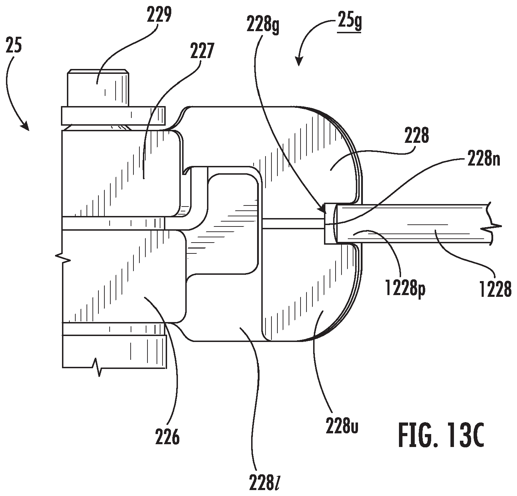

**FIGs. 13C-13H** illustrate another embodiment of the slide holder **25** with the gripper arms **226, 227** and the gripper mouth **228** with the upper and lower jaws **228u, 228*****l**.* The slide holder **25** can cooperate with an alignment member **1228** to define an origin position whereby a known feature located on the robot **20** (shown as the gripper **25g)** can be aligned to a known feature located elsewhere. As shown, the upper jaw **228u** can include a notch **228n** at an outer front facing perimeter edge as the gripper **25** alignment feature. The lower jaw **228*l*** can comprise ridges **228r** for a secure grip of a respective slide. The alignment member **1228** can comprise a pin **1228p** that can be slidably received in the notch **228n.** The alignment member **1228** can reside at a stationary position in the housing **10h (****FIG. 1A****).** An alignment protocol defined by computer code in a processor of a module (**100₄,** **FIG. 2****)** that is in communication with the robot **20** can direct the robot **20 (****FIG. 1C****)** (to which the gripper **25g** is attached) to move until a desired alignment is achieved. Other robot positions may then be determined from this "origin" position. This is an example embodiment for aligning a known feature located on the robot/gripper to a known feature located elsewhere. The alignment method can use this aligned position as a starting point for calculating other positions at which the robot is aligned to other desired features or locations based on known spatial relationships between the "feature located elsewhere" and the "other desired features".

More generally, this alignment system can be described as an alignment scheme comprising a pair of corresponding fiducial alignment features, one having a static position within the range of motion of the robot and the other residing somewhere upon the robot **20,** and a multidimensional set of defined relations between the position at which these two features are aligned and a plurality of other important positions of the robot and/or gripper **25g** within the system **10.**

The alignment member **1228** can be held at any suitable location inside the housing **10h** of the sample analysis system **10** to aid in robot alignment. In some embodiments, the alignment member **1228** can be coupled to the slide storage queue **11 (****FIG. 19****).** This alignment system can facilitate a faster alternative to the tedious and often subjective process of individually "teaching" each operational robot position. The position at which the gripper notch **228n** is aligned (in all three axes, X, Y, Z) to the alignment member **1228 (****FIG. 13H****)** can be stored and/or entered into the operational (i.e., service) control circuit of the device **10** as an origin. Then, since the position of the alignment member **1228** relative to the various slide destinations (input/output carousel disk, storage locations, and load lock chamber) are both static and known, all the other robot positions can be derived from that origin position using a defined set or table of nominal offset values.

**FIG. 13E** shows the gripper **25g** below the statically mounted alignment member **1228.** **FIG. 13F** shows the gripper translated upward with the alignment member **1228** in the notch **228n** of the upper jaw member **228u.** **FIG. 13C** shows a top view of the alignment position which can optionally define a gap **228g** residing between a front end of the alignment member **1228** and the notch **228** in an origin position. In other embodiments, the front end of the alignment member **1228** can abut the laterally extending perimeter cross wall segment of the notch **228n** in the origin position (not shown). **FIG. 13G** shows an undesired gap "G" under the alignment member **1228** and over the lower jaw **228*l***, inside the notch **228n,** indicating the origin position has not yet been met. **FIG. 13H** shows the alignment member **1228** in the notch **228n** and abutting an upper surface of the lower jaw **228*l*** indicating a proper origin position for defining a location in the housing **10h** in X, Y and Z coordinates. The notch **228n** can be configured to snugly slidaby receive the alignment member **1228** with a width of the notch **228n** corresponding to a width of the alignment member **1228** plus a nominal distance, such as + 0.005 inches or less.

**FIG. 14A** illustrates that the PCB **225** can include a control circuit **225c** with a signal processor that receives input from the three sensors **25s,** shown as inputs S1, S2, S3, to control the grip and release actions of the gripper **25g.**

The sensors **25s** can include a home sensor **25s₁** (sensor 1), a slide presence sensor **25s₂** (sensor 2), and a slide gripped sensor **25s₃** (sensor 3). Each sensor **25s** can be an electro-optical proximity sensor. However, other sensor types may be used. The gripper **25g** can be configured to retain a fully gripped state, even upon loss of power. The grip force of the gripper jaws **228u, 228*l***, when closed against a slide **S,** can be between 0.25-10 pounds which can be adjusted or selected based on load springs and the like. The interconnect PCB **225** can include a Z e-chain input, a grip motor **25m** and sensors **25s₁**, **25s₂**, **25s₃**. The slide gripped sensor **25s₃** (sensor 3) can be coupled to the arm **226** attached to the lower jaw **228*l***. The home sensor **25s₁** (sensor 1) and the slide presence sensor **25s₂** (sensor 2) can be coupled to the other arm **227** and upper jaw **228u.**

**FIGS. 14A** and **14B** illustrate a first configuration of the sensor gripper **25g** with the jaws **228u, *228l*** of the gripper open and home sensor 1(**25s₁**)-closed, grip sensor-2 (**25s₂**) open and slide presence sensor -3 (**25s₃**) open. Motor power can be used to overcome the grip spring force until sensor 1(**25s₁**) is closed and sensor 2(**25_{S2}**) is checked for open. The arm **226** can be held at a slight angle upward with a low spring force. Sensor 3 can always be open without a slide (the end of the arm **226** adjacent the sensor **25s₃** does not activate that sensor).

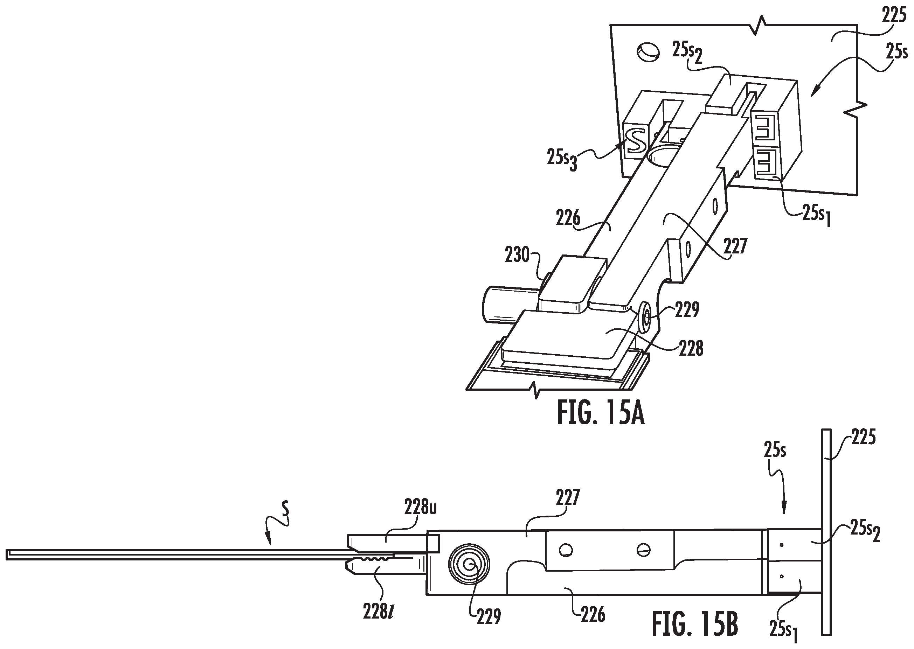

**FIGS. 15A** and **15B** illustrate a second configuration of the sensor gripper **25g** with the jaws **228u, *228l*** of the gripper closed against a slide **S** and home sensor 1(**25s₁**)-open, grip sensor-2 (**25s₂**) closed and slide presence sensor -3 (**25s₃**) closed. The gripper motor **25m** can be used to close the gripper arm **227** until sensor 2 (**25s₂**) is triggered closed (the adjacent end of this arm next to the sensor rises relative to the position in **FIG. 14A****).** Home sensor, sensor 1, **25s₁**, is then checked for open (end of arm away from jaw **228** rises relative to position in **FIG. 14A****),** motor **25m** can then power to a lower current and can, optionally, rely on a spring force to hold the slide **S.** The arm **226** can be compressed to a horizontal orientation which triggers the grip sensor 2 (**25s₂**) closed.

**FIGS. 16A** and **16B** illustrate a third configuration of the sensor gripper **25g** with the jaws **228u, *228l*** of the gripper closed but no slide **S** is present with home sensor 1(**25s₁**)-open, grip sensor-2 (**25s₂**) closed and slide presence sensor -3 (**25s₃**) open. When the jaws **228u, *228l*** are closed without a slide **S** therebetween, the arm **226** is not displaced and does not trigger sensor 3 which remains open.

As shown in **FIGS. 13B****,** **14A****,** **15A** and **16A****,** the (lower) arm **226** can also be pivotably attached to the second (upper) arm **227** with a bushing **230** that is concentric to the shaft **229.** When a slide **S** is present, the jaw ***228l*** can pivot the arm **226** relative to shaft **230** down to the horizontal position, raising the inner end of the arm adjacent the grip sensor **25s₃** to trigger the grip sensor 3-closed **(****FIG. 15A****).**

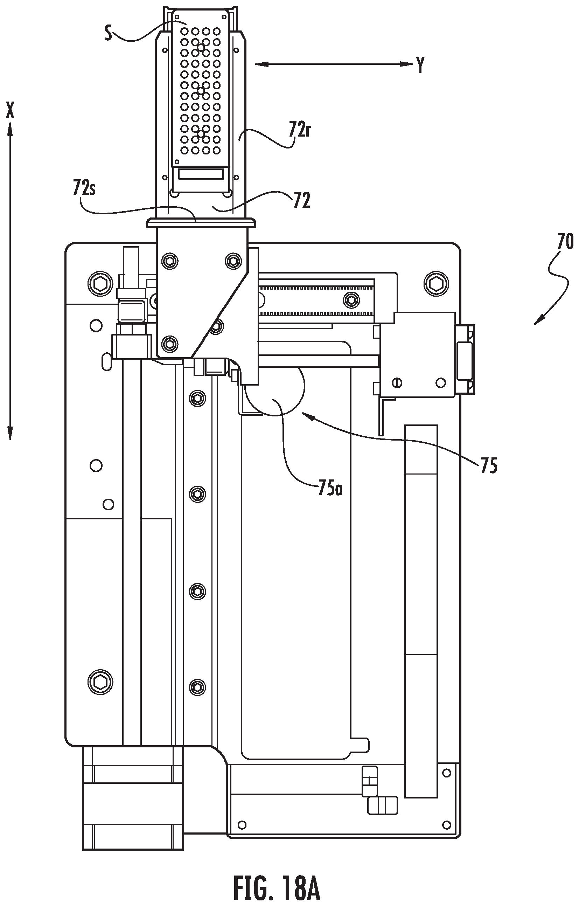

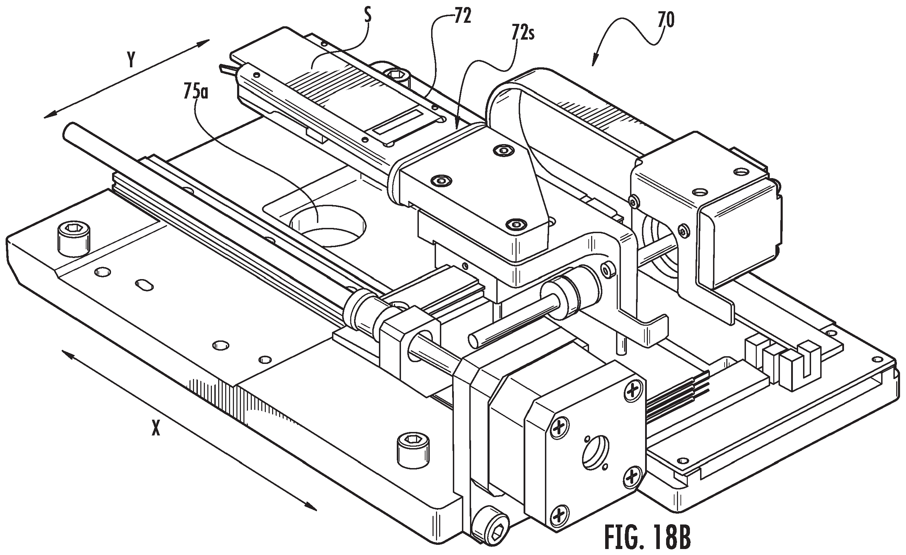

Referring now to **FIGS. 18A-18C****,** exemplary X-Y stages and components thereof are shown. **FIG. 18A** illustrates the X-Y stage **70** at a load/lock/seal configuration with the slide holder **72** extended in the X-direction and moved laterally in the Y-direction relative to an aperture **75a** associated with the scanning center location **75.** **FIG. 18B** illustrates the slide holder **72** retracted in the X-direction and moved laterally closer to the aperture **75a** of the scanning center **75** relative to the position shown in **FIG. 18A****.** The (vacuum/load lock chamber) sealing surface **72s** (also interchangeably described as a seal interface) can extend laterally about an entire perimeter of the slide holder **72** and can have radially extending opposing arcuate ends that are spaced apart in a lateral dimension. This full radius sealing surface **72s** can reduce pressure needed to seal by eliminating sharp corner bulges in rectangular shaped sealing perimeters. The sealing surface **72s** can reside longitudinally spaced apart a distance of between about 0.1 inches and about 1 inch from a recess region **72r** of the slide holder **72** that holds an end of a respective slide **S.**

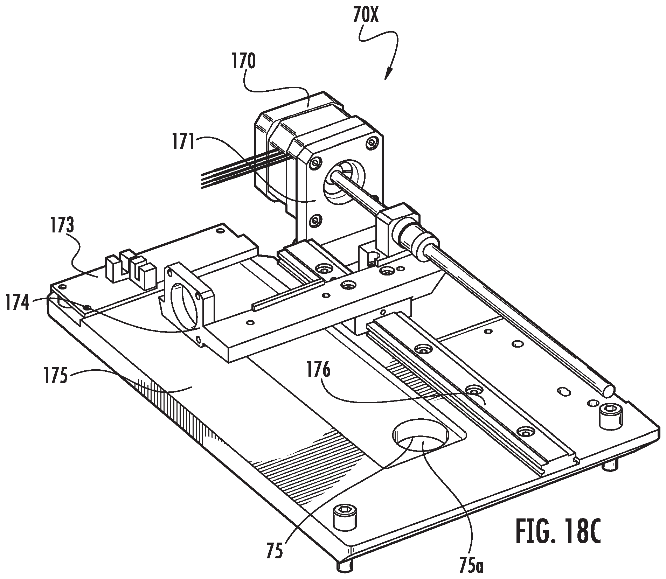

**FIG. 18C** illustrates exemplary X-stage components **70X** of the X-Y stage **70.** As shown, these include an X-stage (x-axis) stepper motor leadscrew drive **170,** a motor mount **171,** an X/Y sensor and interconnect PCB **173,** an X-stage carriage **174,** a baseplate **175,** and an X-stage bearing and block **176.**

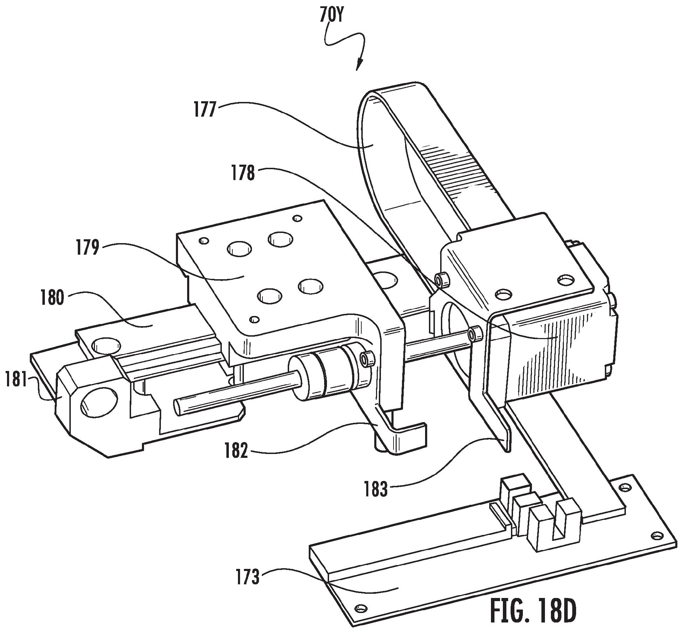

**FIG. 18D** illustrates exemplary Y-stage components **70Y** of the X-Y stage **70.** As shown, these include a y-stage (y-axis) motor and ground flex cable **177,** a y stepper motor leadscrew drive **178,** a y-stage carriage **179,** a y-stage bearing and block **180,** an X-stage carriage member (with integrated Y motor mount) **181,** a Y home flag **182,** an X home flag **183** and the sensor and interconnect PCB 173.

**FIG. 19** illustrates that the mass spectrometer system **10** can include an internal storage rack **10r** that is inside the housing **10h** (optionally adjacent the door **57)** in an open internal space **160** for holding slides **S** before and/or after analysis. The storage rack **10r** can provide a vertical column of compartments **11** for holding respective slides **S.** However, the storage rack **10r** can be provided in any suitable configuration and is not required to have a vertical column of compartments and may be provided as a plurality of racks.

**FIGS. 20A** and **20B** illustrate exemplary vacuum system configurations (shown without the plumbing to the load lock chamber **55).** As shown, a roughing pump **107₂** in direct fluid communication with the load lock chamber **55** can be provided under a turbomolecular vacuum pump **107₁** which is in direct fluid communication with the acquisition vacuum chamber **60.** The turbo pump **107₁** can be connected to the vacuum chamber **60** via an elbow **60e** and may reside adjacent a back of the enclosure **10h** (closer to the back **10r** than the front **10h).** The turbo pump **107₁** can be above the roughing pump **107₂** and placed so that there is an open air flow space above a top surface **107t** thereof to have a clear air flow path thereacross. The turbo pump **107₁** can reside adjacent the high pressure acquisition-chamber vacuum gauge G/1151 **(****FIG. 20B****).** The enclosure **10h** can include an oil drain line **191** leading from the roughing pump **107₂** to the front of the housing **10f.** The system **10** can include a Foreline trap **114** between the roughing vacuum pump **1072** and the turbo vacuum pump **1071** and can also include an oil mist filter **192.** A foreline gauge **115₂ (****FIG. 20A****)** can be in fluid communication with the foreline conduit **114c.**

**FIG. 21** is a rear side perspective view of the instrument **10** configured to provide a positive pressure interior (excluding the vacuum chamber **60** and load lock chamber **55** when under vacuum) relative to the external environment with an example air intake and outlet flow paths which can include forced or active fan-driven air flow paths **F_{A}** (solid darker arrows) and passive air flow paths **P_{A}** (lighter, broken line arrows). The rear **10r** of the housing **10h** can include a plurality of spaced apart air intake vents **197** under which are fans **195** with filters **196** which intake air based on the fans **195** (indicated by arrows **F_{A}** pointing into the housing **10h).** The top of the housing **10t** can include vents **197** which output air as indicated by the arrows pointing out. The top **10t** can include both passive airflow vent(s) and active or fan-driven airflow vents **197** which are in fluid communication with internal fans **195** that force air out. The outward flow fans may or may not also include filters. The vents **197** and fans **195** cooperate to provide a positive pressure inside the housing **10h.**

Thus, for example, behind each of the four circular vent patterns **197** on the back can be a respective fan **195** (with a filter **196)** pulling air in and behind the smaller square vent patterns **197** on the top **10t** can be two or three fans **195** that draw/push air up and out. The intake fans on the back **10r** can have a higher fan speed and/or a larger size than the outlet fans on the top **10t** of the enclosure **10h.** One of the vents **197** on the top **10t,** shown as the vent **197** to the right side (viewed from the rear of the housing) can be an outlet of a cooling path **Lc** of a laser heat sink **108h** coupled to the laser **108** with an inlet **Li** of the laser heat sink cooling path **Lc** at the front of the instrument **10f.** The larger vent (rectangular) pattern on the top **10t** can optionally be oversized relative to the fan-driven outlet vents **197.**

**FIG. 22** is a flow chart of exemplary actions for handling samples for analysis in a mass spectrometer. As shown, a housing with a mass spectrometer, a load lock chamber with opposing first and second end portions, and an acquisition vacuum chamber is provided. The first end portion of the load lock chamber is in or adjacent the acquisition vacuum chamber and the second end portion is spaced apart from the first end portion and has a sealably attachable door (block **300**). A positive pressure inside the housing outside the acquisition vacuum chamber is provided/generated (block **302**). A slide for analysis is received in a slide receiving channel of a carousel via a port at a front of the housing (block **304**). The carousel is rotated (block **306**). An end portion of the slide is gripped with a slide gripper held by an arm of a robot (block **308**). The slide is movable in three-dimensions in the housing from the carousel toward the load lock chamber or a storage rack (block **309**).

A slide holder of an X-Y stage is inserted into the first end of the load lock chamber from the vacuum chamber while the door is sealably closed to the load lock chamber (block **310**). The load lock chamber is automatically sealed from the vacuum chamber upon engagement of the slide holder with a seal interface of the first end portion of the load lock chamber (block **320**) The load lock chamber is then vented to atmosphere (block **330**). The door is opened (block **340**). A slide is inserted from the second end portion of the load lock chamber to engage the slide holder in the load lock chamber (block **350**). The door is closed to seal the load lock chamber (block **360**). The load lock chamber is evacuated to a vacuum pressure (block **370**). The slide holder with the slide is retracted into the vacuum chamber while the door is closed and the load lock chamber is under vacuum (block **380**). The sample is then analyzed in the vacuum chamber by the mass spectrometer (block **381**).

The load lock chamber can be compact and have a height that is less than its lateral width with a small volumetric capacity that can be between about 1cc to about 200 cc (empty), more typically between about 1cc to about 100cc, such as about 10 cc, about 15 cc, about 20 cc, about 25 cc, about 30 cc, about 35 cc, about 40 cc, about 45 cc, about 50 cc, about 55 cc, about 60 cc, about 65 cc, about 70 cc, about 75 cc, about 80 cc, about 85 cc, about 90 cc, about 95 cc and about 100 cc and the through channel can have an oblong perimeter shape (in a lateral dimension) (block **301**).

The slide holder can have an angled oblong sealing surface that extends about a perimeter of an inner (vacuum chamber facing) end of the slide holder (block **312**).

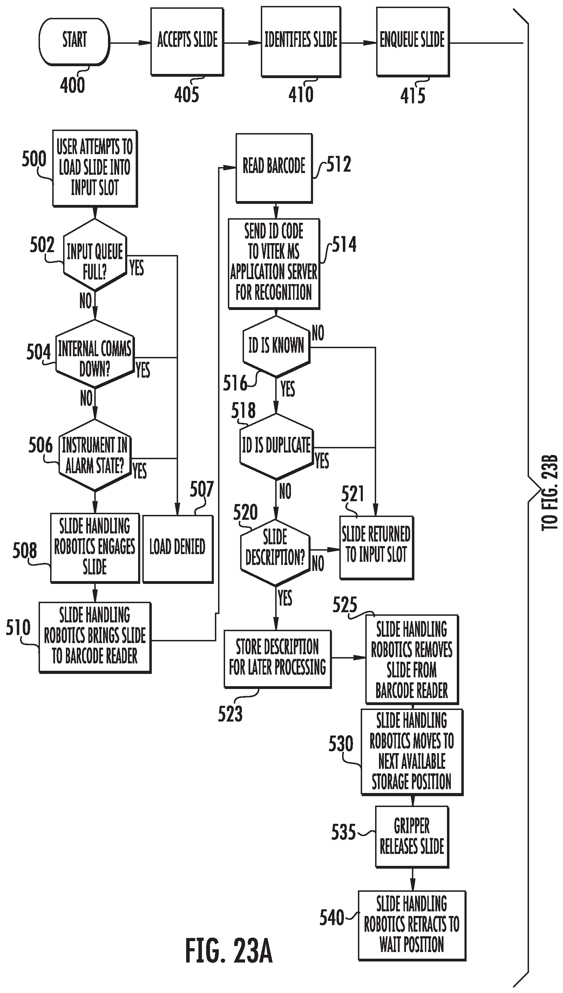

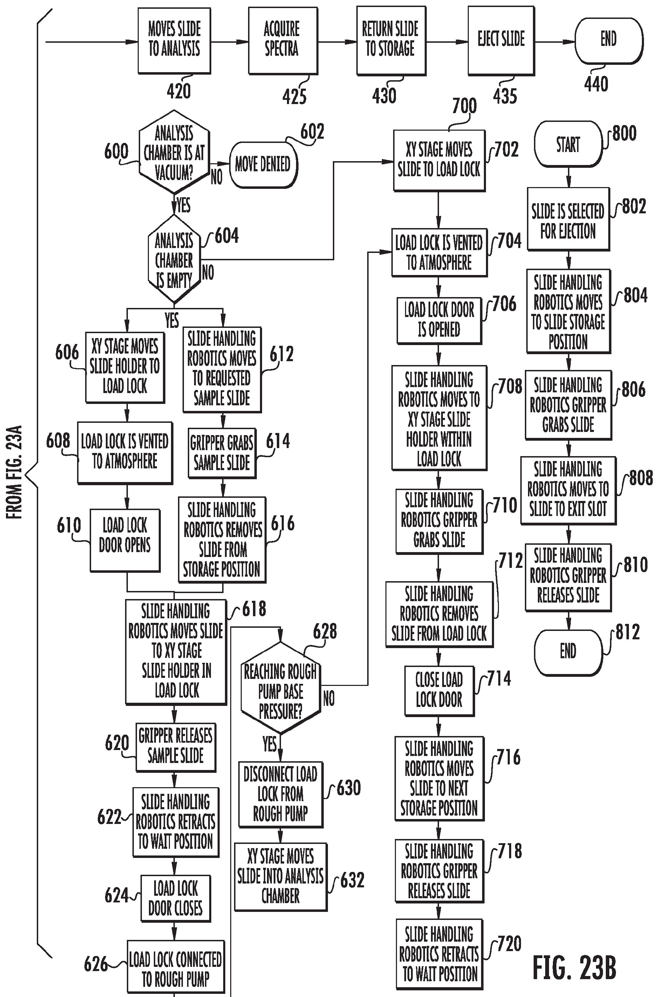

**FIGs. 23A** and **23B** illustrate example actions that can be carried out by the instrument and sample handler according to embodiments of the present invention.
Start (block **400**)
Accepts Slide (block **405**)
Identifies Slide (block **410**)
En queue slide (block **415**)
Moves slide to analysis (block **420**)
Acquire spectra (block **425**)
Return slide to storage (block **430**)
Eject Slide (block **435**)
End (block **440**)
User attempts to load slide into input slot (block **500**)
Input queue full? (block **502**)
Internal comms down? (block **504**)
Instrument in Alarm state? (block **506**)
Load denied (block **507**)
Slide Handling Robotics engages slide (block **508**)
Slide Handling Robotics brings slide to barcode reader (block **510**)
Read Barcode (block **512**)
Send ID code to Application Server for recognition (block **514**)
ID is known (block **516**)
ID is duplicate (block **518**)
Slide Description? (block **520**)
Slide returned to input slot (block **521**)
Store description for later processing (block **523**)
Slide Handling Robotics removes slide from barcode reader (block **525**)
Slide Handling Robotics moves to next available storage position (block **530**)
Gripper releases slide (block **535**)
Slide Handling Robotics retracts to wait position (block **540**)
Analysis chamber is at vacuum? (block **600**)
Move denied (block **602**)
Analysis chamber is empty (block **604**)
XY stage moves slide holder to load lock (block **606**)
Load lock is vented to atmosphere (block **608**)
Load lock door opens (block **610**)
Slide Handling Robotics moves to requested sample slide (block **612**)
Gripper grabs sample slide (block **614**)
Slide Handling Robotics moves slide from storage position (block **616**)
Slide Handling Robotics moves slide to XY stage slide holder in load lock (block **618**)
Gripper releases sample slide (block **620)**
Slide Handling Robotics retracts to wait position (block **622)**
Load lock door closes (block **624)**
Load lock connected to rough pump (block **626)**
Reaching rough pump base pressure? (block **628)**
Disconnect load lock from rough pump (block **630)**
XY stage moves slide into analysis chamber (block **632)**
XY stage moves slide to load lock (block **700**) (block **702)**
Load lock is vented to atmosphere (block **704)**
Load lock door is opened (block **706**)
Slide Handling Robotics moves to XY stage slide holder within load lock (block **708**)
Slide Handling Robotics gripper grabs slide (block **710)**
Slide Handling Robotics removes slide from load lock (block **712)**
Close load lock door (block **714**)
Slide Handling Robotics moves slide to next storage position (block **716)**
Slide Handling Robotics gripper releases slide (block **718)**
Slide Handling Robotics retracts to wait position (block **720)**
Start (block **800**)
Slide is selected for ejection (block **802**)
Slide Handling Robotics moves to slide storage position (block **804)**
Slide Handling Robotics gripper grabs slide (block **806)**
Slide Handling Robotics moves to slide to exit slot (block **808)**
Slide Handling Robotics gripper releases slide (block **810)**
End (block **812**)

The mass spectrometry system **10** can be a MALDI-TOF MS system. MALDI-TOFMS systems are well known. *See, e.g.,* U.S. Patents 5,625,184; 5,627,369; 5,760,393; 6,002,127; 6,057,543; 6,281,493; 6,541,765; 5,969,348; and 9,536,726, the contents of which are hereby incorporated by reference as if recited in full herein. The majority of modern MALDI-TOF MS systems employ delayed extraction (e.g., time-lag focusing) to mitigate the negative spectral qualities of ion initial energy distribution.

In some embodiments, a sample (on a matrix slide) for analysis is introduced into a mass spectrometer system (optionally a MALDI-TOF MS system with a TOF flight tube in a vacuum chamber and comprising a laser). Laser pulses can be successively applied during analysis of a respective single sample to obtain mass spectra. A substance (e.g., constituent, biomolecule, microorganism, protein) in the sample is identified based on the obtained spectra. The TOF flight tube length can optionally be between about 0.4 m and about 1.0 m. However, longer or shorter flight tubes may be used in some embodiments.

The MS system **10** can optionally be a table top unit with TOF flight tube length about 0.8 m.

The sample can comprise a biosample from a patient and the identifying step can be carried out to identify if there is a defined protein or microorganism such as bacteria in the sample for medical evaluation of the patient.

The analysis can identify whether any of about 150 (or more) different defined species of bacteria and/or fungi is in a respective sample based on the obtained spectra. The target mass range can be between about 2,000-20,000 Daltons.

The mass spectrometer system **10** can include a patient record database and/or server that can include electronic medical records (EMR) with privacy access restrictions that are in compliance with HIPPA rules due to the client-server operation and privilege defined access for different users.

The foregoing is illustrative of the present invention and is not to be construed as limiting thereof. Although a few exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention. Therefore, it is to be understood that the foregoing is illustrative of the present invention and is not to be construed as limited to the specific embodiments disclosed, and that modifications to the disclosed embodiments, as well as other embodiments, are intended to be included within the scope of the invention.
Specific embodiments of the present invention are listed below as E1 to E21.
E1. A slide sample handling and/or analysis system, comprising:
   a housing comprising a front wall with a slide port;
   an input/output module comprising at least one rotatable carousel comprising a slide receiving channel, wherein the carousel rotates between first and second positions, wherein the first position is a slide intake position that positions an open end of the slide receiving channel outward, aligned with the slide port to be able to slidably receive a slide, and wherein the second position places the open end of the slide channel facing into the housing;
   a robot with a robot arm that holds a slide gripper residing inside the housing in communication with the rotatable carousel, wherein the robot arm can move in three-dimensions in the housing;
   a load lock chamber having longitudinally opposing first and second end portions, a through channel, and a door sealably coupled to the second end portion; and
   an acquisition vacuum chamber with an X-Y stage and a slide holder with a vacuum seal interface that can extend into the load lock chamber to seal the first end portion of the load lock chamber and retract with a slide transferred to the slide holder from the slide gripper of the robot into the acquisition vacuum chamber, after the door of the load lock chamber is closed.
E2. The system of E 1, wherein the carousel is configured to have a single one of the slide receiving channel with a length that extends over greater than a major portion of a diameter of the carousel across a center of the carousel.
E3. The system of E 1 or E2, wherein the open end of the slide channel has a perimeter that is recessed inward relative to an outer diameter of the carousel.
E4. The system of any one of E 1 to E3, wherein the slide gripper comprises first and second gripper arms that are parallel and side-by-side and pivotably held by a laterally extending shaft adjacent an upper jaw and lower jaw of the slide gripper, the first arm coupled to the upper jaw of the slide gripper and the second arm coupled to the lower jaw of the slide gripper, optionally wherein the upper jaw of the slide gripper comprises a notch configured to receive an alignment member with the notch residing above the lower jaw.
E5. The system of E 4, wherein the system further comprises:
   a gripper motor coupled to the first and second gripper arms;
   a home sensor, a grip sensor and a slide presence sensor, each of the home sensor, grip sensor and slide presence sensor coupled to at least one of the first and second gripper arms; and
   a control circuit in communication with the gripper motor and the home sensor, the grip sensor and the slide presence sensor, wherein the control circuit receives sensor data from the home sensor, the grip sensor and the slide presence sensor to identify an open or closed state of the upper jaw and lower jaw, and, if the upper and lower jaw are in the closed state, to identify whether a slide is present.
E6. The system of E 5, wherein the first gripper arm resides adjacent to but at a height above the second gripper arm, and wherein the home sensor and the grip sensor are aligned, one above another on a printed circuit board coupled to an end of the first gripper arm.
E7. The system of E 6, wherein an end of the second gripper arm is coupled to the slide presence sensor, and wherein the slide presence sensor is held by the printed circuit board adjacent but spaced apart from the home sensor and the grip sensor.
E8. The system of E 6 or E7, wherein the printed circuit board is attached to a pivotable arm segment of the robot arm of the robot.
E9. The system of any one of E 1 to E8, further comprising a first vacuum pump connected to the acquisition vacuum chamber and a second vacuum pump connected to the load lock chamber, wherein the first vacuum pump resides above the second vacuum pump in the housing.
E10. The system of any one of E 1 to E9, further comprising a removable bezel face plate providing the slide port, and wherein the bezel face plate is held by a bevel bracket with an open window that is coupled to an upper bracket member that resides inside the housing and angles inwardly at an angle between 5-45 degrees from a location adjacent the bezel face plate to an upper segment thereof,
   and optionally one or more of:
   wherein the bezel face plate has a width between 4-6 inches and a height between 6-10 inches,
   wherein the housing is a table-top housing configured with a width, length and height of about: 0.7 m x 0. 7 m x 1.1 m,
   wherein the housing includes an internal sample storage space with a width, length and height size that is about 0.25 m x 0.3 m by 0.3 m.
E11. The system of E 10, wherein the removable bezel face plate is attached to an internal bezel bracket plate that has an upper bracket member that holds a camera, wherein the upper bracket member extends inwardly from a segment proximate the bezel face plate to an upper segment thereof at an angle between 5-45 degrees, and wherein the camera has a field of view that covers at least an end portion of the slide when the carousel is in the second position.
E12. The system of E 10 or E11, wherein the input/output module comprises a drive motor coupled to a drive shaft under the carousel that rotates the carousel between the first and second positions, and wherein when the removable bezel face plate is detached from the housing to expose an access window, the carousel can be removed from the access window of the housing for cleaning.
E13. The system of any one of E 1 to E12, further comprising a plurality of spaced apart intake vents in fluid communication with intake fans with filters on a back of the housing and a plurality of output vents in fluid communication with output fans on a top of the housing, wherein the intake and output fans cooperate to provide a positive pressure inside the housing with at least one of passive and/or fan-driven airflow out of the housing to inhibit contaminants from entering the housing.
E14. The system of any one of E 5 to E8, wherein the home sensor and the grip sensor are separately triggerable by a position of a first end of the first arm, and wherein the slide presence sensor is triggerable by a position of a first end of the second arm.
E15. The system of E 13, further comprising a laser coolant path that extends from an inlet on a front of the housing to an outlet on top of the housing.
E16. The system of any one of E 1 to E15, wherein the robot has a base that is mounted to a floor of the housing, and wherein the input/output module has a base that is mounted to the floor of the housing adjacent the robot base and closer to the front of the housing than the robot base.
E17. The system of any one of E 1 to E16, wherein the port is oblong in a lateral dimension with laterally opposing arcuate ends.
E18. The system of any one of E 1 to E17, wherein the through channel of the load lock chamber has a lateral width that is greater than a height and a volume that is between 1 cc and 100 cc.
E19. A method of operating a slide gripper assembly comprising:
   providing a slide gripper assembly with first and second adjacent arms, one attached to a lower jaw and one attached to a cooperating upper jaw; and
   electronically directing a closing and opening of the upper and lower jaws whereby a state of one or more of a first home sensor, a second grip sensor and a third slide presence sensor correlates to a position of the gripper jaws,
   optionally one or more of:
      (a) for the electronically directing step, the first home sensor and the second grip sensor are separately triggerable by a position of a first end of the first arm, and wherein the third slide presence sensor is triggerable by a position of a first end of the second arm;
      (b) wherein the first arm is an upper arm that is above the second arm and is attached to the lower jaw, wherein the first and second arms are attached together by a laterally extending shaft adjacent the upper and lower jaws, and wherein the method further comprises pivoting the lower shaft to have a horizontal orientation only when a slide is present between the upper and lower jaws which then triggers the third slide presence sensor to identify a slide present state for the electronically directing step.
E20. A method of handling a sample for analysis, comprising:
   providing a housing with a mass spectrometer, a load lock chamber with opposing first and second end portions, and an acquisition vacuum chamber, wherein the first end portion of the load lock chamber is in or adjacent the acquisition vacuum chamber and the second end portion is spaced apart from the first end portion and has a sealably attachable door;
   providing a positive pressure inside the housing outside the acquisition vacuum chamber;
   receiving a slide for analysis in a slide receiving channel of a carousel via a port at a front of the housing;
   rotating the carousel;
   gripping an end portion of the slide with a slide gripper held by an arm of a robot;
   moving the slide in three-dimensions in the housing from the carousel toward the load lock chamber or a storage rack;
   inserting a slide holder of an X-Y stage into the load lock chamber from the vacuum chamber while the door is sealably closed to the second end portion of the load lock chamber;
   automatically sealing the first end portion of the load lock chamber from the vacuum chamber upon engagement of the slide holder with a seal interface of the first end portion of the load lock chamber;
   venting the load lock chamber to atmosphere;
   opening the door;
   inserting the slide from the slide gripper into the load lock chamber from the second end portion of the load lock chamber to transfer the slide to the slide holder in the load lock chamber;
   closing the door to seal the load lock chamber;
   evacuating the load lock chamber to a vacuum pressure; and
   retracting the slide holder with the slide into the vacuum chamber while the door is closed and the load lock chamber is under vacuum.
E21. The method of E 20, further comprising analyzing a sample in or on the slide, wherein the sample is analyzed to identify one or more microorganisms by analyzing a mass range between about 2000 to about 20,000 Dalton,
   optionally further comprising one or more of:
   (a) translating the slide gripper to an alignment member held by a fixed structure, optionally the storage rack, in the housing and slidaby inserting or receiving the alignment member in the slide gripper to define an X, Y, Z calibrated position in the housing for use in automatic robotic movement of the slide holder through operational positions in the housing including movement to and from the carousel and into the load lock chamber,
   (b) generating a laser coolant air flow path from a front of the housing over a heat sink of a laser then and up and out of the top of housing,
   (c) removing a detachable bezel plate from a front wall of the housing which holds the port on the front of the housing, then removing the carousel through the front of the housing.

## Claims

1. A sample analysis system, comprising:
a housing comprising a slide port;
an acquisition vacuum chamber in the housing;
a storage rack in the housing for storing at least one slide; and
a robot arm that holds a slide gripper, wherein the robot arm is moveable in three-dimensions in the housing and is moveable to a first position adjacent the slide port, to a second position that positions the slide gripper adjacent to or in the acquisition chamber, and a third position for depositing the at least one slide in the storage rack.

2. The system of claim 1, wherein the storage rack can hold multiple slides inside the housing before and after the slides are moved by the robot arm to the acquisition vacuum chamber.

3. The system of claim 1, wherein the storage rack comprises a vertical column of compartments for holding slides.

4. The system of claim 1, further comprising at least one carousel comprising a slide receiving channel, wherein the at least one carousel rotates between first and second positions, wherein the first position is a slide intake position that positions an open end of the slide receiving channel outward, aligned with the slide port to be able to slidably receive a slide, and wherein the second position places the open end of the slide receiving channel facing into the housing.

5. The system of claim 4, further comprising a camera within the housing, wherein the camera has a field of view that covers at least an end portion of the slide when at least one of the at least one carousel is in the second position.

6. The system of claim 1, further comprising a load lock chamber in the housing, the load lock chamber having opposing first and second end portions and a door, wherein the door is configured to selectively move between an open position and a closed position, wherein, in the closed position the door is sealably coupled to the second end portion of the load lock chamber.

7. The system of claim 6, further comprising an X-Y stage in the vacuum chamber, wherein the X-Y stage is coupled to a slide holder, wherein the slide holder cooperates with the X-Y stage whereby the slide holder travels between extended and retracted positions, wherein, in the extended position, the slide holder extends into the load lock chamber and is configured to receive a slide provided by the slide gripper, and wherein, in the retracted position, the door of the load lock chamber is in the closed position and the slide holder is configured to position the slide in the acquisition vacuum chamber.

8. The system of claim 7, wherein the slide holder comprises a vacuum seal interface that seals the first end portion of the load lock chamber when the slide holder is in the extended position.

9. The system of claim 1, wherein the slide gripper comprises first and second gripper arms that are parallel and side-by-side and pivotably held by a laterally extending shaft adjacent an upper jaw and lower jaw of the slide gripper, the first arm coupled to the upper jaw of the slide gripper and the second arm coupled to the lower jaw of the slide gripper.

10. A method of providing a sample for analysis, comprising:
providing a housing with a mass spectrometer, an acquisition vacuum chamber, and a storage rack;
receiving a slide for analysis in a slide receiving channel of a port of the housing;
gripping an end portion of the slide with a slide gripper held by an arm of a robot;
moving the slide in three-dimensions in the housing from the slide receiving channel to the storage rack; and
moving the slide in three-dimensions in the housing from the storage rack to the acquisition vacuum chamber.

11. The method of claim 10, further comprising:
receiving a second slide for analysis in the slide receiving channel;
gripping an end portion of the second slide with the slide gripper of the robot arm; and
moving the second slide in three-dimensions in the housing from the slide receiving channel to the storage rack.

12. The method of claim 10, further comprising removing the slide from the acquisition vacuum chamber using the slide gripper of the robot arm and moving the slide in three-dimensions in the housing from the acquisition vacuum chamber to the storage rack.

13. The method of claim 12, further comprising moving the slide in three-dimensions in the housing from the storage rack to the slide receiving channel using the slide gripper of the robot arm.

14. The method of claim 10, further comprising removing the slide from the acquisition vacuum chamber using the slide gripper of the robot arm and moving the slide in three-dimensions in the housing from the acquisition vacuum chamber to the slide receiving channel.

15. The method of claim 10, further comprising translating the slide gripper to an alignment member in the housing and slidably inserting or receiving the alignment member in the slide gripper to define an X, Y, Z calibrated position in the housing and using the calibrated position to control automatic robotic movement of the slide gripper through operational positions in the housing including movement to and from the slide receiving channel, the storage rack, and the acquisition vacuum chamber.
